# EUROPEAN PATENT APPLICATION

(11) **EP 4 492 715 A1**
(43) Date of publication of application: **15.01.2025**
(21) Application number: 23791044.3
(22) Date of filing: 06.04.2023
(51) Int. Cl.: H04L 1/16, H04L 5/00

(54) **FEEDBACK METHOD FOR MULTICAST SERVICE, AND COMMUNICATION APPARATUS**

(30) Priority: 22.04.2022 CN 202210432263
(71) Applicant: Huawei Technologies Co., Ltd., Shenzhen, Guangdong 518129 (CN)
(72) Inventor: ZHOU, Wuxiao, Shenzhen, Guangdong 518129 (CN); XIA, Jinhuan, Shenzhen, Guangdong 518129 (CN); JIAO, Shurong, Shenzhen, Guangdong 518129 (CN); SHEN, Jianping, Shenzhen, Guangdong 518129 (CN)
(74) Representative: Goddar, Heinz J.
(86) International application number: PCT/CN2023/086663
(87) International publication number: WO 2023/202388

(57) **Abstract**

A multicast service feedback method and a communication apparatus are provided. The method includes: A terminal device receives first configuration information from a network device, and when determining that a resource set overlaps a unicast uplink resource, sends HARQ-ACK information for a multicast service in a first reporting mode to the network device. The HARQ-ACK information includes an ACK value or a NACK value. The first reporting mode indicates to feed back HARQ-ACK information based on an ACK/a NACK. The first configuration information indicates a second reporting mode, and the second reporting mode indicates to feed back HARQ-ACK information based on a NACK-only. The resource set includes a plurality of multicast PUCCH resources. According to the method provided in this application, when there are a plurality of multicast PUCCH resources that can be used by the terminal device to send the HARQ-ACK information for the multicast service, before obtaining a decoding result of a multicast PDSCH TB, the terminal device can determine whether a PUCCH resource used to feed back the HARQ-ACK information overlaps the unicast uplink resource, to determine whether to switch the second reporting mode to the first reporting mode.

## Description

### CROSS-REFERENCE TO RELATED APPLICATIONS

This application claims priority to Chinese Patent Application No. 202210432263.4, filed with the China National Intellectual Property Administration on April 22, 2022 and entitled "MULTICAST SERVICE FEEDBACK METHOD AND COMMUNICATION APPARATUS", which is incorporated herein by reference in its entirety.

### TECHNICAL FIELD

This application relates to the field of multicast service transmission technologies, and in particular, to a multicast service feedback method and a communication apparatus.

### BACKGROUND

In a new radio (new radio, NR) technology, a hybrid automatic repeat request (hybrid automatic repeat request, HARQ) for a multicast service is supported, to ensure reliability of the multicast service as much as possible. HARQ feedback for a multicast service has an acknowledgment (acknowledgment, ACK)/a negative acknowledgment (negative acknowledgment, NACK)-based HARQ-ACK information reporting mode and a NACK-only (NACK-only)-based HARQ-ACK information reporting mode. When there are a plurality of resources used to feed back HARQ-ACK information, how a terminal device feeds back the HARQ-ACK information is a to-be-resolved problem.

### SUMMARY

This application provides a multicast service feedback method and a communication apparatus. For a case in which there are a plurality of resources used to feed back HARQ-ACK information, a solution in which a terminal device feeds back the HARQ-ACK information is provided.

According to a first aspect, an embodiment of this application provides a multicast service feedback method. The method may be performed by a first communication apparatus. The first communication apparatus may be a communication device or a communication apparatus that can support a function required by the communication device to implement the method, for example, a chip system. The following uses an example in which the communication device is a terminal device for description. For example, the first communication apparatus is a terminal device, a chip disposed in a terminal device, or another component configured to implement a function of a terminal device. The method includes: The terminal device receives first configuration information from a network device, and when determining that a resource set overlaps a unicast uplink resource, sends HARQ-ACK information for a multicast service to the network device in a first reporting mode. The first reporting mode indicates to feed back HARQ-ACK information based on an ACK/a NACK. The first configuration information indicates a second reporting mode, and the second reporting mode indicates to feed back HARQ-ACK information based on a NACK-only. The unicast uplink resource includes a PUCCH resource and/or a unicast physical uplink shared channel (physical uplink shared channel, PUSCH) resource. The resource set includes a plurality of multicast PUCCH resources. The HARQ-ACK information includes an ACK value or a NACK value, and the HARQ-ACK information corresponding to the first reporting mode may include an ACK value, or may include a NACK value. The HARQ-ACK information corresponding to the second reporting mode includes a NACK value, and does not include an ACK value.

In this embodiment of this application, when the network device configures the second reporting mode for the terminal device, and there are a plurality of multicast PUCCH resources that can be used by the terminal device to send the HARQ-ACK information for the multicast service, the terminal device may determine whether the plurality of multicast PUCCH resources overlap the unicast uplink resource, and when determining that the plurality of multicast PUCCH resources overlap the unicast uplink resource, switch the second reporting mode to the first reporting mode. According to the solution provided in this embodiment of this application, when it is determined that the plurality of PUCCH resources used to feed back the HARQ-ACK information overlap the unicast uplink resource, the HARQ-ACK information is fed back in the first reporting mode.

In a possible implementation, the resource set and the unicast PUCCH resource belong to a same PUCCH resource set. To be specific, in this embodiment of this application, a PUCCH resource configured by the network device for a unicast service may be reused as a resource used to feed back the HARQ-ACK information for the multicast service. For example, when the network device does not separately configure a PUCCH resource for the multicast service, the terminal device may reuse the PUCCH resource configured by the network device for the unicast service to send the HARQ-ACK information for the multicast service.

In a possible implementation, the method further includes: The terminal device receives second configuration information sent by the network device, where the second configuration information indicates a multicast PUCCH resource set, and the resource set belongs to the multicast PUCCH resource set. To be specific, in this embodiment of this application, a resource used to feed back the HARQ-ACK information for the multicast service may come from a PUCCH resource specially configured by the network device for the multicast service. Therefore, the multicast PUCCH resource set can be flexibly obtained.

In a possible implementation, the resource set includes 2^{m}-1 PUCCH resources, m is a quantity of TBs used by the terminal device to feed back the HARQ-ACK information, and m is an integer greater than or equal to 2.

In a possible implementation, that a resource set overlaps a unicast uplink resource includes: The resource set overlaps the unicast uplink resource whose priority is the same as that of the resource set. The same priority herein means that the priority of the resource set is the same as the priority of the unicast uplink resource. In other words, that "the resource set overlaps the unicast uplink resource whose priority is the same as that of the resource set" means that "the resource set overlaps the unicast uplink resource having a same priority as the resource set".

In a possible implementation, that the terminal device determines that a resource set overlaps a unicast uplink resource includes: The terminal device determines candidate multicast PUCCH resources from the resource set, and when the candidate multicast PUCCH resources meet a first condition, the terminal device determines that the resource set overlaps the unicast uplink resource. The first condition includes: time domain resources corresponding to the candidate multicast PUCCH resources include a set of time domain symbols respectively occupied by resources in the resource set. To be specific, it is clearly specified that the set of time domain symbols respectively occupied by the resources in the resource set is the candidate multicast PUCCH resources used to feed back the HARQ-ACK information for the multicast service.

In a possible implementation, that time domain resources corresponding to the candidate multicast PUCCH resources include a set of time domain symbols respectively occupied by resources in the resource set includes a plurality of implementation forms, for example, the following first, second, third, or fourth implementation form.

In the first implementation form, the time domain resources corresponding to the candidate multicast PUCCH resources are the set of time domain symbols respectively occupied by the resources in the resource set.

In the second implementation form, the time domain resources corresponding to the candidate multicast PUCCH resources are a set of a first starting symbol and a first ending symbol that are occupied by the resource set, and symbols between the first starting symbol and the first ending symbol that are occupied by the resource set. The first starting symbol is a symbol with earliest start time in the time domain symbols occupied by the resources in the resource set, and the first ending symbol is a symbol with latest end time in the time domain symbols occupied by the resources in the resource set.

In the third implementation form, the time domain resources corresponding to the candidate multicast PUCCH resources are a set of all symbols included in a slot that the resource set is in.

In the fourth implementation form, the time domain resources corresponding to the candidate multicast PUCCH resources are a set of a first symbol, a second symbol, and symbols between the first symbol and the second symbol. The first symbol is a starting symbol of the resource set, and the second symbol is an ending symbol of the resource set. In addition, starting symbols of all PUCCH resources in the resource set are the same, and ending symbols of all the PUCCH resources in the resource set are the same.

Symbols included in the time domain resources corresponding to the candidate multicast PUCCH resources are specified in the foregoing four solutions. Therefore, before obtaining a decoding result of a multicast PUSCH TB, the terminal device may determine, based on whether the candidate multicast PUCCH resources overlaps the unicast uplink resource, whether to switch the second reporting mode to the first reporting mode.

In a possible implementation, the method further includes: The terminal device receives indication information from the network device, where the indication information indicates a manner in which the terminal device determines that the resource set overlaps the unicast uplink resource. In this solution, the network device may indicate the terminal device to determine the manner in which the resource set overlaps the unicast uplink resource, for example, indicate one of the four implementation forms of the time domain resources corresponding to the candidate multicast PUCCH resources. This is more flexible.

According to a second aspect, an embodiment of this application provides a multicast service feedback method. The method may be performed by a second communication apparatus. The second communication apparatus may be a communication device or a communication apparatus that can support a function required by the communication device to implement the method, for example, a chip system. The following uses an example in which the communication device is a network device for description. For example, the second communication apparatus is a network device, a chip disposed in a network device, or another component configured to implement a function of a network device. The method includes: The network device sends first configuration information to a terminal device, and when determining that a resource set overlaps a unicast uplink resource, receives, in a first reporting mode, HARQ-ACK information sent by the terminal device for a multicast service. The first reporting mode indicates to feed back HARQ-ACK information based on an ACK/a NACK. The first configuration information indicates a second reporting mode, and the second reporting mode indicates to feed back HARQ-ACK information based on a NACK-only. The unicast uplink resource includes a unicast PUCCH resource and/or a unicast PUSCH resource. The resource set includes a plurality of multicast PUCCH resources. The HARQ-ACK information includes an ACK value or a NACK value, and the HARQ-ACK information corresponding to the first reporting mode may include an ACK value, or may include a NACK value. The HARQ-ACK information corresponding to the second reporting mode includes a NACK value, and does not include an ACK value.

In a possible implementation, the resource set includes 2^{m}-1 PUCCH resources, m is a quantity of TBs used by the terminal device to feed back the HARQ-ACK information, and m is an integer greater than or equal to 2.

In a possible implementation, that the network device determines that a resource set overlaps a unicast uplink resource includes: The network device determines candidate multicast PUCCH resources from the resource set, and when the candidate multicast PUCCH resources meet a first condition, the network device determines that the resource set overlaps the unicast uplink resource. The first condition includes: time domain resources corresponding to the candidate multicast PUCCH resources include a set of time domain symbols respectively occupied by resources in the resource set.

In a possible implementation, that time domain resources corresponding to the candidate multicast PUCCH resources include a set of time domain symbols respectively occupied by resources in the resource set includes the following first, second, third, or fourth case.

In the first case, the time domain resources corresponding to the candidate multicast PUCCH resources are the set of time domain symbols respectively occupied by the resources in the resource set.

In the second case, the time domain resources corresponding to the candidate multicast PUCCH resources are a set of a first starting symbol occupied by the resource set, a first ending symbol occupied by the resource set, and symbols between the first starting symbol and the first ending symbol.

In the third case, the time domain resources corresponding to the candidate multicast PUCCH resources are a set of all symbols included in a slot that the resource set is in.

In the fourth case, the time domain resources corresponding to the candidate multicast PUCCH resources are a set of a first symbol, a second symbol, and symbols between the first symbol and the second symbol. The first symbol is a starting symbol of the resource set, and the second symbol is an ending symbol of the resource set. The network device configures or indicates that starting symbols of all PUCCH resources in the resource set are the same, and the network device configures or indicates that ending symbols of all the PUCCH resources in the resource set are the same.

In a possible implementation, the first starting symbol is a symbol with earliest start time in the time domain symbols occupied by the resources in the resource set, and the first ending symbol is a symbol with latest end time in the time domain symbols occupied by the resources in the resource set.

In a possible implementation, that a resource set overlaps a unicast uplink resource includes: The resource set overlaps the unicast uplink resource whose priority is the same as that of the resource set.

In a possible implementation, the method further includes: The terminal device receives indication information from the network device, where the indication information indicates a manner in which the terminal device determines that the resource set overlaps the unicast uplink resource.

In a possible implementation, the method further includes: The terminal device receives second configuration information from the network device, where the second configuration information indicates a multicast PUCCH resource set, and the resource set belongs to the multicast PUCCH resource set.

In a possible implementation, the resource set and the unicast PUCCH resource belong to a same PUCCH resource set.

For technical effects brought by the second aspect and the possible implementations of the second aspect, refer to the descriptions of the technical effects of the first aspect and the possible implementations of the first aspect.

According to a third aspect, an embodiment of this application provides a communication apparatus. The communication apparatus has a function of implementing behavior in the method embodiment of the first aspect. For beneficial effects, refer to the descriptions of the first aspect. Details are not described herein again. The communication apparatus may be the terminal device in the first aspect, or the communication apparatus may be an apparatus, for example, a chip or a chip system, that can implement the method provided in the first aspect.

In a possible design, the communication apparatus includes a corresponding means (means) or module configured to perform the method in the first aspect. For example, the communication apparatus includes a processing unit (or referred to as a processing module or a processor sometimes) and/or a transceiver unit (or referred to as a transceiver module or a transceiver sometimes). Such units (modules) may perform corresponding functions in the method examples in the first aspect.

For example, the transceiver module may be configured to receive first configuration information from a network device, where the first configuration information indicates a second reporting mode, and the second reporting mode indicates to feed back HARQ-ACK information based on a NACK-only. When the processing module determines that a resource set overlaps a unicast uplink resource, the transceiver module is further configured to send HARQ-ACK information for a multicast service to the network device in a first reporting mode. The first reporting mode indicates to feed back multicast HARQ-ACK information based on an ACK/a NACK. The second reporting mode indicates to feed back HARQ-ACK information based on a NACK-only. The HARQ-ACK information includes an ACK value or a NACK value, and the HARQ-ACK information corresponding to the first reporting mode may include an ACK value, or may include a NACK value. The HARQ-ACK information corresponding to the second reporting mode includes a NACK value, and does not include an ACK value. The resource set includes a plurality of multicast PUCCH resources. The unicast uplink resource includes a unicast PUCCH resource and/or a unicast PUSCH resource. For details, refer to the detailed descriptions in the method examples. Details are not described herein again.

According to a fourth aspect, an embodiment of this application provides a communication apparatus. The communication apparatus has a function of implementing behavior in the method embodiment of the second aspect. For beneficial effects, refer to the descriptions of the second aspect. Details are not described herein again. The communication apparatus may be the network device in the second aspect, or the communication apparatus may be an apparatus, for example, a chip or a chip system, that can implement the method provided in the second aspect.

In a possible design, the communication apparatus includes a corresponding means (means) or module configured to perform the method in the second aspect. For example, the communication apparatus includes a processing unit (or referred to as a processing module or a processor sometimes) and/or a transceiver unit (or referred to as a transceiver module or a transceiver sometimes). Such units (modules) may perform corresponding functions in the method examples in the second aspect.

For example, the transceiver module may be configured to send first configuration information to a terminal device, where the first configuration information indicates a second reporting mode, and the second reporting mode indicates to feed back HARQ-ACK information based on a NACK-only. When the processing module determines that a resource set overlaps a unicast uplink resource, the transceiver module is further configured to receive, in a first reporting mode, HARQ-ACK information sent by the terminal device for a multicast service. The first reporting mode indicates to feed back HARQ-ACK information based on an ACK/a NACK. The second reporting mode indicates to feed back HARQ-ACK information based on a NACK-only. The HARQ-ACK information includes an ACK value or a NACK value, and the HARQ-ACK information corresponding to the first reporting mode may include an ACK value, or may include a NACK value. The HARQ-ACK information corresponding to the second reporting mode includes a NACK value, and does not include an ACK value. The resource set includes a plurality of multicast PUCCH resources. The unicast uplink resource includes a unicast PUCCH resource and/or a unicast PUSCH resource. For details, refer to the detailed descriptions in the method examples. Details are not described herein again.

According to a fifth aspect, an embodiment of this application provides a communication apparatus. The communication apparatus may be the communication apparatus in any one of the third aspect or the fourth aspect in the foregoing embodiments, or a chip or a chip system disposed in the communication apparatus in any one of the third aspect or the fourth aspect. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the terminal device or the network device in the foregoing method embodiments.

The communication interface in the communication apparatus in the fifth aspect may be a transceiver in the communication apparatus, for example, implemented by using an antenna, a feeder, a codec, and the like in the communication apparatus. Alternatively, if the communication apparatus is a chip disposed in the communication apparatus, the communication interface may be an input/output interface of the chip, for example, an input/output pin.

According to a sixth aspect, an embodiment of this application provides a communication apparatus. The communication apparatus includes an input/output interface and a logic circuit. The input/output interface is configured to input and/or output information. The logic circuit is configured to perform the method according to any one of the first aspect or the second aspect.

According to a seventh aspect, an embodiment of this application provides a chip system. The chip system includes a processor and may further include a memory and/or a communication interface, and is configured to implement the method according to any one of the first aspect or the second aspect. In a possible implementation, the chip system further includes the memory, configured to store a computer program. The chip system may include a chip, or may include a chip and another discrete component.

According to an eighth aspect, an embodiment of this application provides a communication system. The communication system includes a terminal device and a network device. The terminal device is configured to perform the method performed by the terminal device in the first aspect, and the network device is configured to perform the method performed by the network device in the second aspect. Alternatively, the communication system may further include more terminal devices and/or more network devices.

According to a ninth aspect, this application provides a computer-readable storage medium. The computer-readable storage medium stores a computer program. When the computer program is run, the method in the first aspect or the second aspect is implemented.

According to a tenth aspect, a computer program product is provided. The computer program product includes computer program code. When the computer program code is run, the method in the first aspect or the second aspect is performed.

For beneficial effects of the third aspect to the tenth aspect and the implementations thereof, refer to the descriptions of the beneficial effects of the method and the implementations thereof according to the first aspect or the second aspect.

### BRIEF DESCRIPTION OF DRAWINGS

FIG. 1 is a diagram of an architecture of a communication system to which an embodiment of this application is applicable;
FIG. 2 is a diagram of feeding back HARQ-ACK information for a multicast service according to an embodiment of this application;
FIG. 3 is a diagram of feeding back HARQ-ACK information (where there are two TBs) for a multicast service according to an embodiment of this application;
FIG. 4 is a schematic flowchart of a multicast service feedback method according to an embodiment of this application;
FIG. 5 is a first diagram of candidate multicast PUCCH resources according to an embodiment of this application;
FIG. 6 is a second diagram of candidate multicast PUCCH resources according to an embodiment of this application;
FIG. 7 is a third diagram of candidate multicast PUCCH resources according to an embodiment of this application;
FIG. 8 is a fourth diagram of candidate multicast PUCCH resources according to an embodiment of this application;
FIG. 9 is a fifth diagram of candidate multicast PUCCH resources according to an embodiment of this application;
FIG. 10 is a sixth diagram of candidate multicast PUCCH resources according to an embodiment of this application;
FIG. 11 is a seventh diagram of candidate multicast PUCCH resources according to an embodiment of this application;
FIG. 12 is a diagram of a structure of a communication apparatus according to an embodiment of this application; and
FIG. 13 is a diagram of another structure of a communication apparatus according to an embodiment of this application.

### DESCRIPTION OF EMBODIMENTS

The technical solutions provided in embodiments of this application may be applied to a fifth generation (5th generation, 5G) mobile communication system, for example, an NR system, or may be applied to a long term evolution (Long term evolution, LTE) system, or may be applied to a next generation mobile communication system or another similar communication system. The technical solutions provided in embodiments of this application may also be applied to an internet of things (internet of things, IoT) system, a narrowband internet of things (narrowband internet of things, NB-IoT) system, or the like, for example, a wireless fidelity (wireless fidelity, Wi-Fi)-based IoT or a wearable Wi-Fi network. The wearable Wi-Fi network may be a Wi-Fi network formed by using a terminal device (for example, a mobile phone) as a virtual access point and an associated wearable device. An internet of things device and a wearable Wi-Fi network device are powered by small-capacity batteries, and require ultra-low power consumption and long battery life. Internet of things devices include, for example, a smart water meter, a smart home, and an industrial sensor.

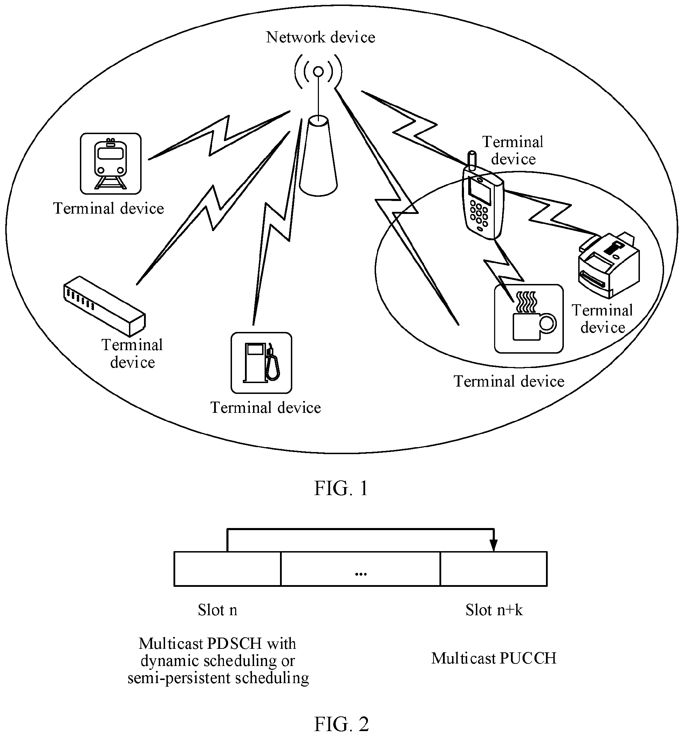

FIG. 1 is a diagram of an example architecture of a communication system to which an embodiment of this application is applicable. The communication system may include a network device and six terminal devices. The six terminal devices may be a cellular phone, a smartphone, a portable computer, a handheld communication device, a handheld computing device, a satellite radio apparatus, a global positioning system, a personal digital assistant (personal digital assistant, PDA), and/or any other suitable devices used for communication in a wireless communication system, and can all be connected to the network device. All the six terminal devices can communicate with the network device. Certainly, a quantity of terminal devices in FIG. 1 is merely an example. There may be fewer or more terminal devices. In addition, the terminal device in FIG. 1 is also an example. For example, the terminal device may also be an internet of things device such as a smart water meter.

In embodiments of this application, the terminal device is a device with a wireless transceiver function, and may send a signal to the network device, or receive a signal from the network device. The terminal device may include user equipment (user equipment, UE), and is sometimes referred to as a terminal, an access station, a UE station, a remote station, a wireless communication device, a user apparatus, or the like. The terminal device is configured to connect people, things, machines, and the like, and may be widely used in various scenarios, for example, including but not limited to terminal devices in the following scenarios: cellular communication, device to device (device to device, D2D), vehicle to everything (vehicle to everything, V2X), machine-to-machine/machine-type communications (machine-to-machine/machine-type communications, M2M/MTC), IoT, virtual reality (virtual reality, VR), augmented reality (augmented reality, AR), industrial control (industrial control), self driving (self driving), remote medical (remote medical), smart grid (smart grid), smart furniture, smart office, smart wearables, smart transportation, smart city (smart city), uncrewed aerial vehicles, robots, and the like. For example, the terminal device may be a mobile phone (mobile phone), a tablet computer (Pad), a computer with a wireless transceiver function, a VR terminal, an AR terminal, a wireless terminal in the industrial control, a wireless terminal in the self driving, a smart speaker in an IoT network, a wireless terminal device in the remote medical, a wireless terminal device in the smart grid, a wireless terminal device in transportation security, a wireless terminal device in the smart city, or a wireless terminal device in a smart home.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. If the various terminal devices described above are located in a vehicle (for example, placed in the vehicle or installed in the vehicle), the terminal devices may be all considered as in-vehicle terminal devices. For example, the in-vehicle terminal devices are also referred to as on-board units (on-board unit, OBU). The terminal device in this application may alternatively be an in-vehicle module, an automobile module, an in-vehicle component, an in-vehicle chip, or an in-vehicle unit that is built in a vehicle as one or more components or units. The vehicle uses the in-vehicle module, the automobile module, the in-vehicle component, the in-vehicle chip, or the in-vehicle unit that is built in the vehicle, to implement a method in this application.

In embodiments of this application, a communication apparatus configured to implement a function of the terminal device may be a terminal device, or may be an apparatus that can support the terminal device in implementing the function, for example, a chip system. The apparatus may be installed in the terminal device. In the technical solutions provided in embodiments of this application, an example in which the apparatus configured to implement the function of the terminal device is the terminal device is used for describing the technical solutions provided in embodiments of this application.

In embodiments of this application, a network device may be an access device through which a terminal device accesses a mobile communication system in a wireless manner, and includes, for example, an access network (access network, AN) device, for example, a base station. The network device may alternatively be a device that communicates with the terminal device over an air interface. The network device may include an evolved NodeB (evolved NodeB) (or referred to as an eNB or an e-NodeB for short) in an LTE system or a long term evolution-advanced (long term evolution-advanced, LTE-A) system. The network device may alternatively include a next generation NodeB (next generation NodeB, gNB) in a 5G NR system. The network device may alternatively include an access node or the like in a wireless fidelity (wireless fidelity, Wi-Fi) system. The network device may alternatively be a station (station), a relay station, an in-vehicle device, a future evolved public land mobile network (Public Land Mobile Network, PLMN) device, a device in a D2D network, a device in an M2M network, a device in an internet of things (internet of things, IoT) network, a network device in a PLMN network, or the like. A specific technology and a specific device form that are used by the network device are not limited in embodiments of this application.

In addition, the base station in embodiments of this application may include a central unit (central unit, CU) and a distributed unit (distributed unit, DU), and a plurality of DUs may be centrally controlled by one CU. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a media access control (media access control, MAC) layer, are set on the DU. It should be noted that division into the protocol layers is merely an example, and there may be other division of protocol layers. A radio frequency apparatus may be remotely deployed and not placed in the DU, or may be integrated into the DU, or may be partially remotely disposed and partially integrated into the DU. This is not limited in embodiments of this application. In addition, in some embodiments, a control plane (control plane, CP) and a user plane (user plane, UP) of the CU may be separated into different entities for implementation, where the entities are respectively a control-plane CU entity (CU-CP entity) and a user-plane CU entity (CU-UP entity). In the network architecture, signaling generated by the CU may be sent to the terminal device through the DU, or signaling generated by UE may be sent to the CU through the DU. The DU may transparently transmit the signaling to the UE or the CU by directly encapsulating the signaling at a protocol layer without parsing the signaling. In this network architecture, the CU is classified as a network device on a radio access network (radio access network, RAN) side. In addition, the CU may alternatively be classified as a network device on a core network (core network, CN) side. This is not limited in this application.

In embodiments of this application, a communication apparatus configured to implement a function of the network device may be a network device, or may be an apparatus that can support the network device in implementing the function, for example, a chip system. The apparatus may be installed in the network device. In the technical solutions provided in embodiments of this application, an example in which the apparatus configured to implement the function of the network device is a network device is used for describing the technical solutions provided in embodiments of this application.

Embodiments of this application mainly relate to HARQ feedback for a multicast service. To better understand the solutions provided in embodiments of this application, content related to a multicast service and HARQ feedback for the multicast service is first described.
(1) A multicast service is a service oriented to a plurality of terminal devices, for example, live streaming and scheduled program playback. In LTE, the multicast service is also referred to as a multimedia broadcast multicast service (multimedia broadcast multicast service, MBMS). In NR, the multicast service is also referred to as a multicast broadcast service (multicast broadcast service, MBS). In embodiments of this application, the multicast service and the multimedia broadcast multicast service may be replaced with each other, and the multicast service and the multicast/multicast broadcast service may also be replaced with each other.

A multicast service may be transmitted on a physical downlink shared channel (physical downlink shared channel, PDSCH). Different from a PDSCH that carries unicast data, a PDSCH that carries multicast data is referred to as a multicast PDSCH. A network device (for example, a base station) sends, to a group of terminal devices in a cell, downlink control information (downlink control information, DCI) carried on a physical downlink control channel (physical downlink control channel, PDCCH), and then the group of terminal devices receive a multicast PDSCH based on scheduling information included in the DCI.

Logical channels used for multicast service transmission include a multicast control channel (multicast control channel, MCCH), a multicast traffic channel (multicast traffic channel, MTCH), a dedicated traffic channel (dedicated traffic channel, DTCH), and the like. The MTCH is a point-to-point downlink channel, and may be used by the network device to send MBS data of a multicast session or a broadcast session to the terminal device. The MCCH is also a point-to-point downlink channel, and may be used by the network device to send multicast control information associated with one or more MTCHs to the terminal device. The DTCH may be used by the network device to send MBS data of a multicast session to the terminal device. Both the MCCH and the MTCH can be mapped to a downlink shared channel (downlink shared channel, DL-SCH). Control information transmitted on the MCCH includes a service identifier and configuration information of the MTCH, for example, a temporary mobile group identity (temporary mobile group identity, TMGI), a session identifier (session ID), a group radio network temporary identifier (group radio network temporary identifier, G-RNTI) used to scramble downlink control information (downlink control information, DCI), and time-domain discontinuous reception (discontinuous reception, DRX) configuration information. One G-RNTI may be associated with one multicast service. It may be understood that if the network device schedules a PDSCH in a semi-persistent scheduling (semi-persistent scheduling, SPS) manner, a radio network temporary identifier used to scramble DCI is a group-configured grant radio network temporary identifier (Group-configured scheduling-RNTI, G-CS-RNTI). One G-CS-RNTI may be associated with one multicast service.

The network device may send, to a group of terminal devices in a cell, DCI carried on a physical downlink control channel (physical downlink control channel, PDCCH). The DCI is scrambled by using a G-RNTI or a G-CS-RNTI associated with a multicast service, and is used to schedule a multicast PDSCH that carries the multicast service. The terminal device obtains, by detecting the DCI scrambled by using the G-RNTI, the physical downlink channel PDSCH scheduled by using the DCI, and further obtains service data carried on the PDSCH.

(2) HARQ-ACK information reporting (report) for a multicast service may also be referred to as multicast HARQ-ACK information reporting (or feedback), or referred to as HARQ-ACK information reporting (or feedback) for short. In embodiments of this application, multicast HARQ-ACK information reporting (or feedback) and HARQ-ACK information reporting (or feedback) may be replaced with each other.

Multicast HARQ-ACK information reporting includes two reporting modes. The two reporting modes are respectively an ACK/a NACK-based HARQ-ACK information reporting mode and a NACK-only-based HARQ-ACK information reporting mode. For ease of description, in this specification, the ACK/NACK-based HARQ-ACK information reporting mode is referred to as a first reporting mode, and correspondingly, the NACK-only-based HARQ-ACK information reporting mode is referred to as a second reporting mode. The first reporting mode means that the terminal device feeds back an ACK or a NACK on a multicast PUCCH based on a decoding result of a PDSCH carrying multicast service data. It may be understood that when the decoding result is correct, the terminal device feeds back the ACK; or when the decoding result is incorrect, the terminal device feeds back the NACK. For example, the terminal device generates HARQ-ACK information with an ACK value when the terminal device correctly decodes a transport block or detects a DCI format indicating a semi-persistent scheduling PDSCH release; otherwise, the terminal device generates HARQ-ACK information with a NACK value.

Correspondingly, the second reporting mode means that the terminal device feeds back a NACK on a multicast PUCCH only when a multicast PDSCH is incorrectly decoded. The terminal device does not feed back an ACK when the multicast PDSCH is correctly decoded. It may also be understood as that the terminal device does not transmit a PUCCH that includes only HARQ-ACK information with an ACK value. It should be noted that the NACK-only-based HARQ-ACK information reporting mode is not applicable to the following cases: a quantity of information bits of HARQ-ACK information exceeding four, first SPS PDSCH reception after activation of SPS PDSCH receptions for an SPS configuration, or DCI formats having associated HARQ-ACK information without scheduling a PDSCH reception.

One or more cells may be configured for one terminal device, one or more G-RNTIs may be configured for one cell, and one or more G-CS-RNTIs may also be configured for one cell. For a G-RNTI or a G-CS-RNTI, the network device may configure the first reporting mode, or may configure the second reporting mode. It may also be understood as that, for a multicast service, the network device may configure the first reporting mode, or may configure the second reporting mode. In addition, for a G-RNTI or a G-CS-RNTI, the network device may further configure HARQ-ACK information feedback to be enabled or disabled. Alternatively, the network device may indicate, by using DCI, whether to feed back HARQ-ACK information. If the network device configures that DCI is used to indicate whether to feed back HARQ-ACK information, a field of the DCI may enable or disable HARQ-ACK information feedback of a scheduled multicast PDSCH.

(3) Resource configuration used to feed back HARQ-ACK information for a multicast service: In embodiments of this application, unless otherwise specified, a resource used to feed back HARQ-ACK information for a multicast service and a resource used to feed back HARQ-ACK information (or a PUCCH resource used to feed back HARQ-ACK information) may be replaced with each other. Alternatively, a resource used to feed back HARQ-ACK information for a multicast service and a multicast PUCCH resource used to feed back HARQ-ACK information may be replaced with each other.

The network device may configure, for the terminal device, a PUCCH resource used to feed back HARQ-ACK information for a multicast service. The terminal device may send the HARQ-ACK information for the multicast service to the network device based on a configuration of the network device. FIG. 2 is a diagram of feeding back HARQ-ACK information for a multicast service. It can be learned from FIG. 2 that the terminal device receives a multicast PDSCH in a slot n, and sends HARQ-ACK information for the multicast PDSCH in a slot n+k. If the first reporting mode is configured for the multicast service, the terminal device determines that a decoding result of the multicast PDSCH is incorrect, and reports, on the multicast PUCCH, HARQ information including a NACK value; otherwise, the terminal device determines that the decoding result of the multicast PDSCH is correct, and reports, on the multicast PUCCH, HARQ information including an ACK value. If the second reporting mode is configured for the multicast service, the terminal device determines that a decoding result of the multicast PDSCH is incorrect, and reports, on the multicast PUCCH, HARQ information including a NACK value; otherwise, the terminal device determines that the decoding result of the multicast PDSCH is correct, and does not report HARQ information including an ACK value.

For the first reporting mode, the network device may configure a PUCCH configuration (PUCCH-Config) for the terminal device, where the PUCCH-Config may indicate a candidate PUCCH resource used by the terminal device to report the HARQ information. The network device may alternatively configure a plurality of PUCCH configurations for the terminal device, and it may be considered as that the network device configures a PUCCH configuration list (PUCCHConfigurationList). The PUCCHConfigurationList includes at most two PUCCH configurations. Similarly, for the second reporting mode, the network device may also configure an independent PUCCH-Config or a PUCCHConfigurationList for the terminal device. It should be noted that, for the second reporting mode, a PUCCH resource format configured by the network device includes a format 0 or a format 1. For the first reporting mode, a PUCCH resource format configured by the network device includes a format 0, a format 1, a format 2, a format 3, or a format 4. For the second reporting mode, one PUCCH-Config includes one PUCCH resource set, and the resource set includes no more than 32 PUCCH resources. For the first reporting mode, one PUCCH-Config may include at most four PUCCH resource sets. It may be understood that the network device configures a PUCCH configuration for a unicast service, and also configures a PUCCH configuration for a multicast service. If the network device does not separately configure an independent PUCCH-Config or a PUCCHConfigurationList for the multicast service, a unicast PUCCH-Config or PUCCHConfigurationList is reused.

Priorities of different multicast services may be different, and it may be understood as that priorities of PDSCHs (referred to as multicast PDSCHs for short in this specification) carrying different multicast services may be different. A priority of a multicast PDSCH may be indicated in DCI for scheduling the multicast PDSCH. If there is no field indicating a priority in the DCI, the priority of the scheduled multicast PDSCH is a low priority by default. For an SPS multicast PDSCH, a priority of the multicast PDSCH is configured in multicast SPS-Config. Correspondingly, multicast PUCCH resources used to feed back HARQ-ACK information also have priorities. In other words, different multicast PUCCH resources may have different priorities. It should be noted that if a priority that is of a multicast PDSCH and that is configured by the network device is a high priority, and the network device enables HARQ-ACK information feedback, the terminal device feeds back HARQ-ACK information by using the high-priority multicast PUCCH. If a priority that is of a multicast PDSCH and that is configured by the network device is a low priority, and the network device enables HARQ-ACK information feedback, the terminal device feeds back HARQ-ACK information by using the low-priority multicast PUCCH. Particularly, two PUCCH-Config are configured in the PUCCHConfigurationList, and a priority of a PUCCH resource configured in the first PUCCH-Config in the two PUCCH-Config is lower than a priority of a PUCCH resource configured in the second PUCCH-Config in the two PUCCH-Config. It may be understood that the first PUCCH-Config and the second PUCCH-Config are distinguished based on an order of PUCCH-Config in the PUCCHConfigurationList. It should be noted that, if the network device does not configure the PUCCHConfigurationList, there is no high-priority PUCCH resource by default. In other words, there is only a low-priority PUCCH resource, and the PUCCH resource is configured in the PUCCH-Config.

Embodiments of this application relate to a normal uplink (normal uplink, NUL) carrier and a supplementary uplink (supplementary uplink, SUL) carrier. One or more uplink carriers associated with a downlink carrier of a cell may include at least one NUL carrier, and may further include one SUL carrier.

Terms "system" and "network" may be used interchangeably in embodiments of this application. In embodiments of this application, "a plurality of" may also be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship for describing associated objects and represents that three relationships may exist. For example, A and/or B may represent the following three cases: Only A exists, both A and B exist, and only B exists. In addition, unless otherwise specified, the character "/" generally indicates an "or" relationship between the associated objects.

Unless otherwise specified, ordinal numbers such as "first" and "second" in embodiments of this application are used to distinguish between a plurality of objects, and are not intended to limit a sequence, a time sequence, priorities, or importance of the plurality of objects. For example, the first reporting mode and the second reporting mode are merely intended to distinguish between different reporting modes, but are not intended to limit functions, priorities, importance, or the like of the two reporting modes. In embodiments of this application, unless otherwise specified, "when" and "in a case that" may be replaced.

The foregoing describes some terms in embodiments of this application, and the following describes some content related to embodiments of this application.

For the terminal device for which the second reporting mode is configured, if a quantity of transport blocks (transport blocks, TBs) for feeding back HARQ-ACK information on a same multicast PUCCH is greater than four, the second reporting mode is switched to the first reporting mode. In other words, even if the network device configures the second reporting mode, if the quantity of TBs for feeding back the HARQ-ACK information on the same multicast PUCCH is greater than four, the terminal device may feed back the HARQ-ACK information in the first reporting mode. If the quantity of TBs for feeding back the HARQ-ACK information on the same multicast PUCCH does not exceed four, the terminal device determines, based on a decoding result of a TB corresponding to each multicast PDSCH, one PUCCH resource from 2^{quantity of TBs}-1 orthogonal multicast PUCCH resources to feed back the HARQ-ACK information. If the quantity of TBs used by the terminal device to feed back the HARQ-ACK information is m, one PUCCH resource is determined from 2^{m}-1 PUCCH resources to feed back the HARQ-ACK information. However, if any one of the following several cases occurs, the terminal device may switch the second reporting mode to the first reporting mode.

Case 1: If a multicast PUCCH resource used to feed back the HARQ-ACK information overlaps a unicast PUCCH (or PUSCH) resource whose priority is the same as that of the multicast PUCCH resource, the second reporting mode is switched to the first reporting mode, and the unicast PUCCH resource or the unicast PUSCH resource is reused to feed back the HARQ-ACK information. In other words, if the multicast PUCCH resource used to feed back the HARQ-ACK information overlaps the unicast PUCCH (or PUSCH) resource whose priority is the same as that of the multicast PUCCH resource, even if the network device configures the second reporting mode, the terminal device still feeds back the HARQ-ACK information in the first reporting mode. In addition, the terminal device reuses the unicast PUCCH resource or the unicast PUSCH resource to feed back the HARQ-ACK information.

Case 2: If a time domain resource of a multicast PUCCH resource based on the second reporting mode and a time domain resource of a multicast PUCCH resource that is based on the first reporting mode and that has a same priority as the multicast PUCCH resource are in a same slot, the second reporting mode is switched to the first reporting mode.

It may be understood that, when the terminal device feeds back the HARQ-ACK information by using one TB, and there is only one PUCCH resource used to feed back the HARQ-ACK information, if the PUCCH resource and a unicast PUCCH resource or a PUSCH resource whose priority is the same as that of the PUCCH resource are located in a same slot, even if the network device configures the second reporting mode, the terminal device still feeds back the HARQ-ACK information in the first reporting mode. In addition, the terminal device reuses the unicast PUCCH resource or the unicast PUSCH resource to feed back the HARQ-ACK information. It should be noted that even if the terminal device determines that the decoding result of the TB for the HARQ-ACK information is correct, the terminal device reuses the unicast PUCCH resource or the unicast PUSCH resource to feed back the HARQ-ACK information.

However, when more than one TB is used to feed back the HARQ-ACK information on a same multicast PUCCH, that is, m is greater than or equal to 2, there are a plurality of multicast PUCCH resources used to feed back the HARQ-ACK information. For example, if the quantity of TBs used by the terminal device to feed back the HARQ-ACK information is four, there are 2⁴-1=15 multicast PUCCH resources used to feed back the HARQ-ACK information. For the plurality of multicast PUCCH resources, in consideration that starting symbols occupied by the different multicast PUCCH resources may be different, quantities of symbols occupied by the different multicast PUCCH resources may also be different. Correspondingly, cases in which the different multicast PUCCH resources overlap a unicast PUCCH (or PUSCH) resource whose priority is the same as those of the multicast PUCCH resources are also different. For example, in a plurality of multicast PUCCH resources, some of the multicast PUCCH resources overlap a unicast PUCCH resource whose priority is the same as those of the multicast PUCCH resources, and some of the multicast PUCCH resources do not overlap a unicast PUCCH resource whose priority is the same as those of the multicast PUCCH resources.

The terminal device determines, from the plurality of multicast PUCCH resources based on a decoding result of a multicast PDSCH TB, a multicast PUCCH resource used to feed back the HARQ-ACK information. To reduce a processing latency of the terminal device and reduce a requirement of performing blind detection by the network device for a plurality of times, the terminal device may determine, without depending on the decoding result of the multicast PDSCH TB, whether a multicast PUCCH resource used to feed back the HARQ-ACK information overlaps a unicast PUCCH resource whose priority is the same as that of the multicast PUCCH resource. However, before obtaining the decoding result of the multicast PDSCH TB, the terminal device cannot determine, based on the decoding result of the multicast PDSCH TB, which PUCCH resource or PUCCH resources are used to feed back the HARQ-ACK information, and therefore cannot determine whether a PUCCH resource used to feed back the HARQ-ACK information overlaps a unicast PUCCH resource or a unicast PUSCH resource whose priority is the same as that of the PUCCH resource. Therefore, when the PUCCH resource used to feed back the HARQ-ACK information overlaps the unicast PUCCH resource or the unicast PUSCH resource whose priority is the same as that of the PUCCH resource, even if the second reporting mode is configured for the terminal device, the terminal device may not switch the second reporting mode to the first reporting mode.

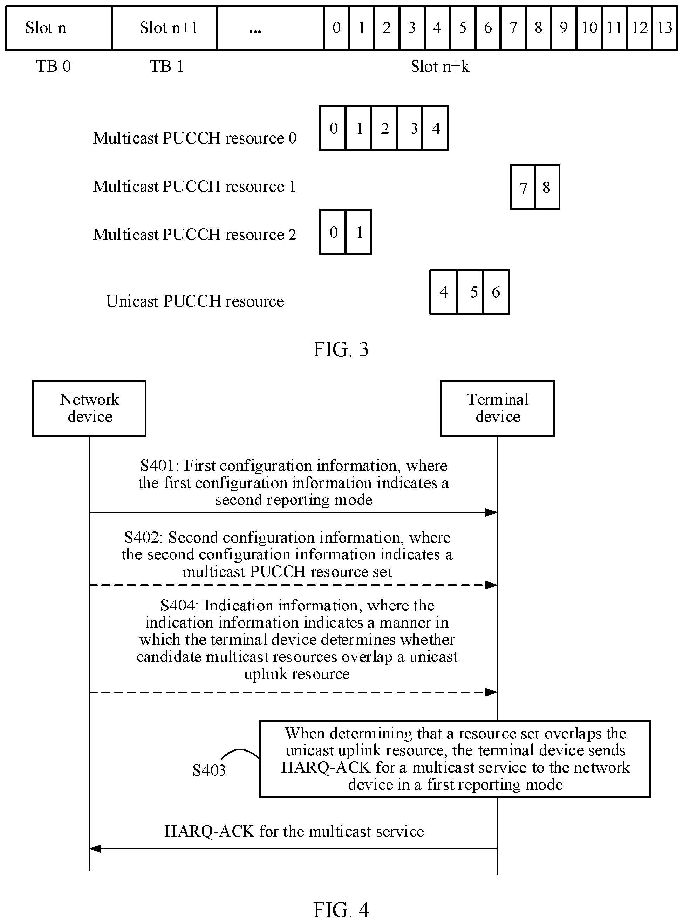

For ease of understanding, FIG. 3 is a diagram of feeding back two multicast PDSCH TBs by a terminal device. In FIG. 3, an example in which the two TBs are a TB 0 and a TB 1 is used. It may be understood that there are three multicast PUCCH resources, namely, a PUCCH resource 0, a PUCCH resource 1, and a PUCCH resource 2 in FIG. 3. The terminal device may feed back HARQ-ACK information on the three multicast PUCCH resources. Symbols occupied by the PUCCH resource 0 are a symbol 0 to a symbol 4, symbols occupied by the PUCCH resource 1 are a symbol 7 and a symbol 8, and symbols occupied by the PUCCH resource 2 are a symbol 0 and a symbol 1. It is assumed that symbols occupied by a unicast PUCCH resource are a symbol 4 to a symbol 6. When a PUCCH resource used to feed back the HARQ-ACK information is the PUCCH resource 0, the PUCCH resource used to feed back the HARQ-ACK information overlaps the unicast PUCCH (or PUSCH) resource whose priority is the same as that of the PUCCH resource. When the PUCCH resource used to feed back the HARQ-ACK information is the PUCCH resource 1, the PUCCH resource used to feed back the HARQ-ACK information does not overlap the unicast PUCCH (or PUSCH) resource whose priority is the same as that of the PUCCH resource. Therefore, when there are a plurality of multicast PUCCH resources, before obtaining a decoding result of a multicast PDSCH TB, the terminal device cannot determine which multicast PUCCH resource or multicast PUCCH resources overlap a unicast PUCCH resource or a unicast PUSCH resource whose priority is the same as that is of the multicast PUCCH resource or those of the multicast PUCCH resources. In this way, when the second reporting mode is configured for the terminal device, the second reporting mode is not switched to the first reporting mode when the second reporting mode needs to be switched to the first reporting mode.

In view of this, the solutions in embodiments of this application are provided. Embodiments of this application provide a method for determining that multicast PUCCH resources overlap a unicast PUCCH resource or a unicast PUSCH resource whose priority is the same as those of the multicast PUCCH resources in time domain. Even if the terminal device does not obtain the decoding result of the multicast PDSCH TB, whether the multicast PUCCH resources overlap the unicast PUCCH resource or the unicast PUSCH resource whose priority is the same as those of the multicast PUCCH resources in time domain can still be determined, to determine whether to switch the second reporting mode to the first reporting mode.

The following describes in detail the solutions provided in embodiments of this application with reference to the accompanying drawings. FIG. 4 is a schematic flowchart of a multicast service feedback method according to an embodiment of this application. In the following description, an example in which the method is applicable to the communication system shown in FIG. 1 is used. A unicast uplink resource below includes a unicast PUCCH resource and/or a unicast PUSCH resource. Whether multicast PUCCH resources overlap a unicast PUCCH resource or a unicast PUSCH resource whose priority is the same as those of the multicast PUCCH resources in time domain may be understood as follows: When the priority of the multicast PUCCH resources is the same as that of the unicast PUCCH resource or the unicast PUSCH resource, whether the multicast PUCCH resources overlap the unicast PUCCH resource or the unicast PUSCH resource in time domain is determined. It may be understood that priorities of the plurality of multicast PUCCH resources are the same. In other words, a priority of a resource set described below is a priority of any multicast PUCCH resource included in the resource set.

FIG. 4 is a schematic flowchart of a multicast service feedback method according to an embodiment of this application. A procedure of the method includes the following steps.

S401: A network device sends first configuration information to a terminal device, and correspondingly, the terminal device receives the first configuration information sent by the network device.

The first configuration information may be used to configure a mode in which the terminal device feeds back HARQ-ACK information for a multicast service. For example, the first configuration information may indicate the terminal device to feed back the HARQ-ACK information based on a NACK-only. In other words, the first configuration information indicates a second reporting mode. For a description of the second reporting mode, refer to related content of the foregoing technical terms. Details are not described herein again. The first configuration information may be carried in one or more of radio resource control (radio resource control, RRC) signaling, DCI, or a MAC control element (control element, CE).

S402: The network device sends second configuration information to the terminal device, and correspondingly, the terminal device receives the second configuration information sent by the network device.

The second configuration information may be used to configure, for the terminal device, a PUCCH resource used to feed back the HARQ-ACK information. For example, the second configuration information may indicate a multicast PUCCH resource set, a PUCCH-Config, or a PUCCHConfigurationList. To be specific, the network device may configure one PUCCH resource or a plurality of PUCCH resources by using the second configuration information. It may be understood that the network device may also configure, for the terminal, a PUCCH resource used for a unicast service. If the network device configures a unicast PUCCH resource for the terminal device, and does not configure a multicast PUCCH resource for the terminal device, the terminal device may reuse the unicast PUCCH resource to feed back the HARQ-ACK information for the multicast service to the network device. Therefore, S402 is not a mandatory step and is an optional step, and is shown by using a dashed line in FIG. 4.

S403: When determining that a resource set overlaps a unicast uplink resource, the terminal device sends the HARQ-ACK information for the multicast service to the network device in a first reporting mode.

The resource set may include a plurality of multicast PUCCH resources. If the network device configures the multicast PUCCH resource set for the terminal device, the resource set belongs to the multicast PUCCH resource set configured by the network device. In other words, the resource set belongs to the multicast PUCCH resource set indicated by the second configuration information. Particularly, if the network device does not configure the multicast PUCCH resource for the terminal device, the resource set and the unicast PUCCH resource belong to a same PUCCH resource set. In this case, the terminal device reuses the unicast PUCCH resource as the multicast PUCCH resource.

When a quantity of TBs used by the terminal device to feed back the HARQ-ACK information is m, the resource set may include 2^{m}-1 PUCCH resources. When m is an integer greater than or equal to 2, the resource set includes a plurality of multicast PUCCH resources. Cases in which the different multicast PUCCH resources overlap the unicast uplink resource are different, and some of the multicast PUCCH resources do not overlap the unicast uplink resource. Before obtaining a decoding result of a multicast PDSCH TB, the terminal device cannot determine which multicast PUCCH resource or multicast PUCCH resources are used to feed back the HARQ-ACK information, and therefore cannot determine whether the multicast PUCCH resource or the multicast PUCCH resources used to feed back the HARQ-ACK information overlaps or overlap the unicast uplink resource.

Therefore, in this embodiment of this application, it is clearly specified that whether the multicast PUCCH resource used to feed back the HARQ-ACK information overlaps the unicast uplink resource is determined based on whether the resource set overlaps the unicast uplink resource. In other words, the 2^{m}-1 PUCCH resources are used as a whole to determine whether the PUCCH resources overlap the unicast uplink resource. It should be noted that, that the resource set overlaps the unicast uplink resource may include that the resource set overlaps the unicast uplink resource whose priority is the same as that of the resource set. In other words, the terminal device determines whether the resource set overlaps the unicast uplink resource whose priority is the same as that of the resource set. In addition, in this embodiment of this application, resource overlapping means that resources overlap in time domain, and the resource overlapping may be partial or complete overlapping.

It may be understood that the terminal device may send the HARQ-ACK information by using some or all of the plurality of multicast PUCCH resources. For ease of description, in this embodiment of this application, some or all of the plurality of multicast PUCCH resources are referred to as candidate multicast PUCCH resources. It should be understood that the candidate multicast PUCCH resources belong to the resource set, and the terminal device may feed back the HARQ-ACK information on some or all of the candidate multicast PUCCH resources. The terminal device may determine the candidate multicast PUCCH resources from the resource set. If the candidate multicast PUCCH resources overlap the unicast uplink resource, the terminal device switches the second reporting mode to the first reporting mode even if the second reporting mode is configured for the terminal device.

In a possible implementation, when the candidate multicast PUCCH resources meet a first condition, the terminal device determines that the resource set overlaps the unicast uplink resource. The first condition includes: time domain resources corresponding to the candidate multicast PUCCH resources include a set of time domain symbols respectively occupied by resources in the resource set. It may also be understood as that the terminal device may use the set of time domain symbols respectively occupied by the resources in the resource set as time domain resources used to feed back the HARQ-ACK information. It should be noted that the resource set may be determined based on a quantity m of TBs for feeding back a HARQ by the terminal device. For example, if the network device configures 15 PUCCH resource sets, but the quantity of TBs for feeding back the HARQ by the terminal device is two, the resource sets are three PUCCH resource sets in the 15 PUCCH resource sets.

The set of time domain symbols respectively occupied by the resources in the resource set may have a plurality of implementation forms, and one or more of the plurality of implementation forms may be predefined or preconfigured. The following separately describes the plurality of implementation forms. In the following description, an example in which m is greater than or equal to 2 and the resource set includes 2^{m}-1 PUCCH resources is used.

Implementation form 1: The time domain resources corresponding to the candidate multicast PUCCH resources are a set of symbols occupied by the 2^{m}-1 PUCCH resources. To be specific, a union set of symbols respectively occupied by the 2^{m}-1 PUCCH resources is used as the time domain resources corresponding to the candidate multicast PUCCH resources.

Implementation form 2: The time domain resources corresponding to the candidate multicast PUCCH resources are a first starting symbol, a first ending symbol, and symbols between the first starting symbol and the first ending symbol that are occupied by the 2^{m}-1 PUCCH resources. The first starting symbol is a symbol with earliest start time in the time domain symbols occupied by the 2^{m}-1 PUCCH resources, and the first ending symbol is a symbol with latest end time in the time domain symbols occupied by the 2^{m}-1 PUCCH resources.

Implementation form 3: Symbols occupied by the candidate multicast PUCCH resource in time domain are all symbols in a slot that the 2^{m}-1 PUCCH resources are in.

Implementation form 4: The time domain resources corresponding to the candidate multicast PUCCH resources are a set of a first symbol, a second symbol, and symbols between the first symbol and the second symbol. The first symbol is a starting symbol of the 2^{m}-1 PUCCH resources, and the second symbol is an ending symbol of the 2^{m}-1 PUCCH resources. It should be noted that a premise of Implementation form 4 is that the network device configures or indicates that starting symbols of the 2^{m}-1 PUCCH resources are the same, and ending symbols of the 2^{m}-1 PUCCH resources are the same.

When the terminal device determines that the candidate multicast PUCCH resources implemented in any one of Implementation form 1 to Implementation form 4 overlap the unicast uplink resource, and the terminal device switches the second reporting mode to the first reporting mode. In other words, the terminal device sends the HARQ-ACK information on the candidate multicast PUCCH resources in the first reporting mode. It should be noted that Implementation form 1 to Implementation form 4 in this embodiment of this application are merely examples. In a possible implementation, the candidate multicast PUCCH resources may further include another implementation form. For example, the candidate multicast PUCCH resources may include the symbols respectively occupied by the 2^{m}-1 PUCCH resources and another symbol determined according to a preset rule.

Particularly, for Implementation form 4, the network device configures or indicates that the starting symbols of the 2^{m}-1 PUCCH resources are the same, and the ending symbols of the 2^{m}-1 PUCCH resources are the same. It may be understood as that the terminal device does not expect the network device to configure or indicate that the starting symbols of the 2^{m}-1 PUCCH resources are different, and does not expect the network device to configure or indicate that the ending symbols of the 2^{m}-1 PUCCH resources are different. If the network device configures or indicates that the starting symbols of the 2^{m}-1 PUCCH resources are different, the terminal device may consider that an incorrect configuration or indication is received, and the terminal device ignores the configuration or indication. Alternatively, the terminal device determines that the network device configures or indicates that the starting symbols of the 2^{m}-1 PUCCH resources are different, and the terminal device does not feed back the HARQ-ACK information. Similarly, if the network device configures or indicates that the ending symbols of the 2^{m}-1 PUCCH resources are different, the terminal device may consider that an incorrect configuration or indication is received, and the terminal device ignores the configuration or indication. Alternatively, the terminal device determines that the network device configures or indicates that the ending symbols of the 2^{m}-1 PUCCH resources are different, and the terminal device does not feed back the HARQ-ACK information.

To understand Implementation form 1 to Implementation form 4, the following describes Implementation form 1 to Implementation form 4 in detail with reference to the accompanying drawings. It may be understood that one or more cells may be configured for one terminal device. One or more G-RNTIs may be configured for one cell, or one or more G-CS-RNTIs may be configured for one cell. When a plurality of cells are configured for the terminal device, subcarrier spacings of the plurality of cells may be the same or may be different. This is not limited in embodiments of this application. The following describes Implementation form 1 to Implementation form 4 by using a plurality of different scenarios as examples.

Scenario 1: A cell is configured for the terminal device, and a carrier of the cell is an NUL carrier. In other words, subcarrier spacings configured for the cell are the same.

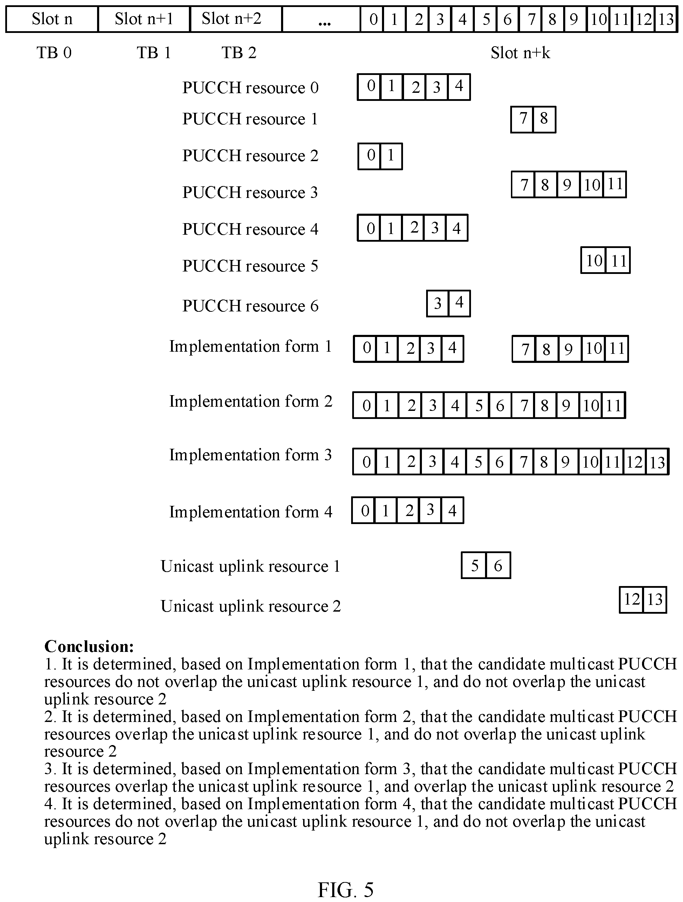

For example, FIG. 5 is a first diagram of the candidate multicast PUCCH resources. In FIG. 5, m=3 is used as an example. To be specific, there are three TBs for the HARQ-ACK information, and there are seven corresponding multicast PUCCH resources. Specifically, the three TBs in FIG. 5 are a TB 0, a TB 1, and a TB 2. The seven multicast PUCCH resources are a PUCCH resource 0 to a PUCCH resource 6. Symbols occupied by the PUCCH resource 0 are a symbol 0 to a symbol 4, symbols occupied by the PUCCH resource 1 are a symbol 7 and a symbol 8, symbols occupied by the PUCCH resource 2 are the symbol 0 and the symbol 1, symbols occupied by the PUCCH resource 3 are the symbol 7 to a symbol 11, symbols occupied by the PUCCH resource 4 are the symbol 0 to the symbol 4, symbols occupied by the PUCCH resource 5 are the symbol 10 and the symbol 11, and symbol occupied by the PUCCH resource 6 are the symbol 3 and the symbol 4.

It can be learned from Implementation form 1 that the time domain resources corresponding to the candidate multicast PUCCH resources are the symbol 0 to the symbol 4 and the symbol 7 to the symbol 11. It can be learned from Implementation form 2 that the time domain resources corresponding to the candidate multicast PUCCH resources are the symbol 0 to the symbol 11. It can be learned from Implementation form 3 that the time domain resources corresponding to the candidate multicast PUCCH resources are the symbol 0 to a symbol 13. It is assumed that the network device configures or indicates that starting symbols of the PUCCH resource 0 to the PUCCH resource 6 are the same, and ending symbols of the PUCCH resource 0 to the PUCCH resource 6 are the same. As shown in FIG. 5, if the starting symbols of the PUCCH resource 0 to the PUCCH resource 6 are the symbol 0, and the ending symbols of the PUCCH resource 0 to the PUCCH resource 6 are the symbol 4, it can be learned from Implementation form 4 that the time domain resources corresponding to the candidate multicast PUCCH resources are the symbol 0 to the symbol 4.

For example, symbols occupied by a unicast uplink resource 1 are the symbol 5 and the symbol 6. The terminal device may determine, based on Implementation form 1, that the resource set does not overlap the unicast uplink resource 1, and therefore does not need to switch the second reporting mode to the first reporting mode. The terminal device may determine, based on Implementation form 2, that the resource set overlaps the unicast uplink resource 1, that is, overlapping occurs on the symbol 5 and the symbol 6. In this case, the terminal device needs to switch the second reporting mode to the first reporting mode. The terminal device may determine, based on Implementation form 3, that the resource set overlaps the unicast uplink resource 1, that is, overlapping occurs on the symbol 5 and the symbol 6. In this case, the terminal device needs to switch the second reporting mode to the first reporting mode. The terminal device may determine, based on Implementation form 4, that the resource set does not overlap the unicast uplink resource 1. In this case, the terminal device does not need to switch the second reporting mode to the first reporting mode.

For another example, symbols occupied by a unicast uplink resource 2 are the symbol 12 and the symbol 13. The terminal device may determine, based on Implementation form 2, that the resource set does not overlap the unicast uplink resource 1, and therefore does not need to switch the second reporting mode to the first reporting mode. The terminal device may determine, based on Implementation form 2, that the resource set does not overlap the unicast uplink resource 2. In this case, the terminal device does not need to switch the second reporting mode to the first reporting mode. The terminal device may determine, based on Implementation form 3, that the resource set overlaps the unicast uplink resource 2, that is, overlapping occurs on the symbol 12 and the symbol 13. In this case, the terminal device needs to switch the second reporting mode to the first reporting mode. The terminal device may determine, based on Implementation form 4, that the resource set does not overlap the unicast uplink resource 2. In this case, the terminal device does not need to switch the second reporting mode to the first reporting mode.

Scenario 2: A plurality of cells may be configured for the terminal device, carriers of the plurality of cells are all NUL carriers, and subcarrier spacings of the plurality of cells are the same. The candidate multicast PUCCH resources are configured on a carrier of one of the plurality of cells.

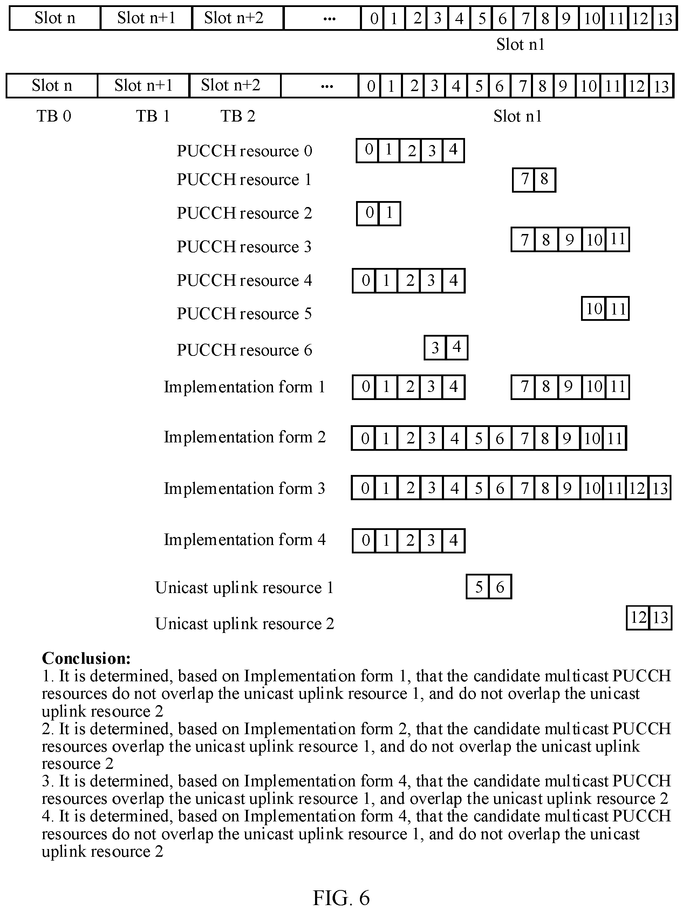

For example, FIG. 6 is a second diagram of the candidate multicast PUCCH resources. In FIG. 6, an example in which two cells are configured for the terminal device, carriers of the two cells are both NUL carriers, and subcarrier spacings of the two cells are the same is used. The candidate multicast PUCCH resources are configured on a carrier of one of the cells, and unicast uplink resources are configured on a carrier of the other cell. In FIG. 6, an example in which the terminal device transmits a multicast PUCCH in a slot n1 and transmits a PUSCH in a slot n1 is used. In the scenario shown in FIG. 6, for determining, by the terminal device, whether the candidate multicast PUCCH resources overlap the unicast uplink resource, refer to related content in FIG. 5. Details are not described herein again.

Scenario 3: A plurality of cells may be configured for the terminal device, carriers of the plurality of cells may be different, and subcarrier spacings of the plurality of cells are the same. For example, subcarrier spacings corresponding to two cells are 15 kHz. The candidate multicast PUCCH resources are configured on a carrier of one of the plurality of cells.

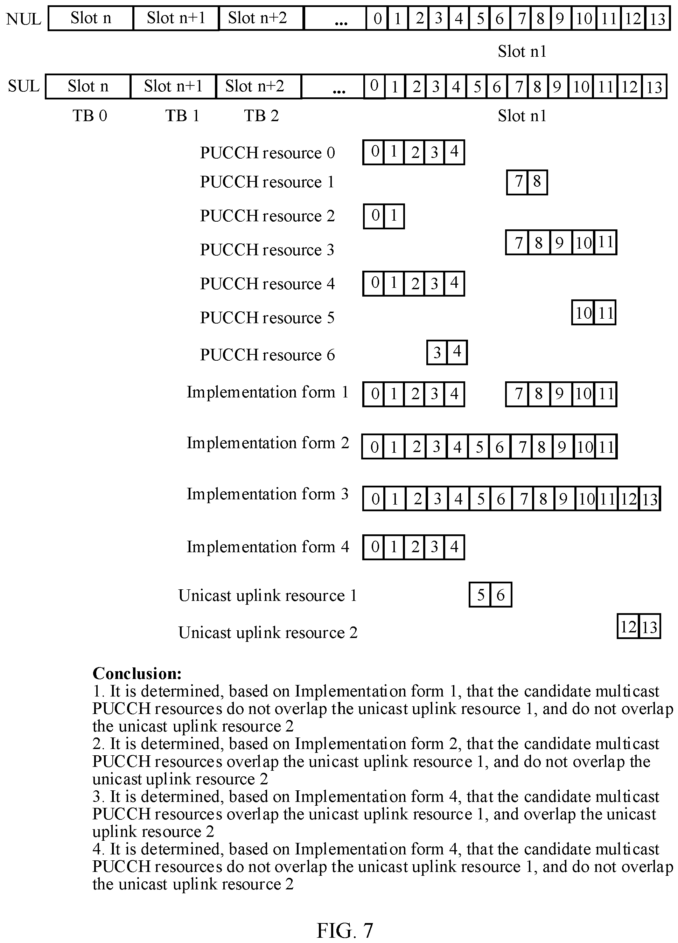

For example, FIG. 7 is a third diagram of the candidate multicast PUCCH resources. In FIG. 7, an example in which two cells are configured for the terminal device, carriers of the two cells include an NUL carrier and an SUL carrier, and subcarrier spacings of the two cells are the same is used. The candidate multicast PUCCH resources are configured on a carrier of one of the cells, and unicast uplink resources are configured on a carrier of the other cell. A difference between FIG. 7 and FIG. 6 lies in that the subcarriers of the two cells configured for the terminal device include the NUL carrier and the SUL carrier. In the scenario shown in FIG. 7, for determining, by the terminal device, whether the candidate multicast PUCCH resources overlap the unicast uplink resource, refer to related content in FIG. 6. Details are not described herein again.

Scenario 4: A plurality of cells may be configured for the terminal device, carriers of the plurality of cells are the same, and subcarrier spacings of the plurality of cells are different. For example, subcarrier spacings corresponding to the plurality of cells include 15 kHz and 30 kHz.

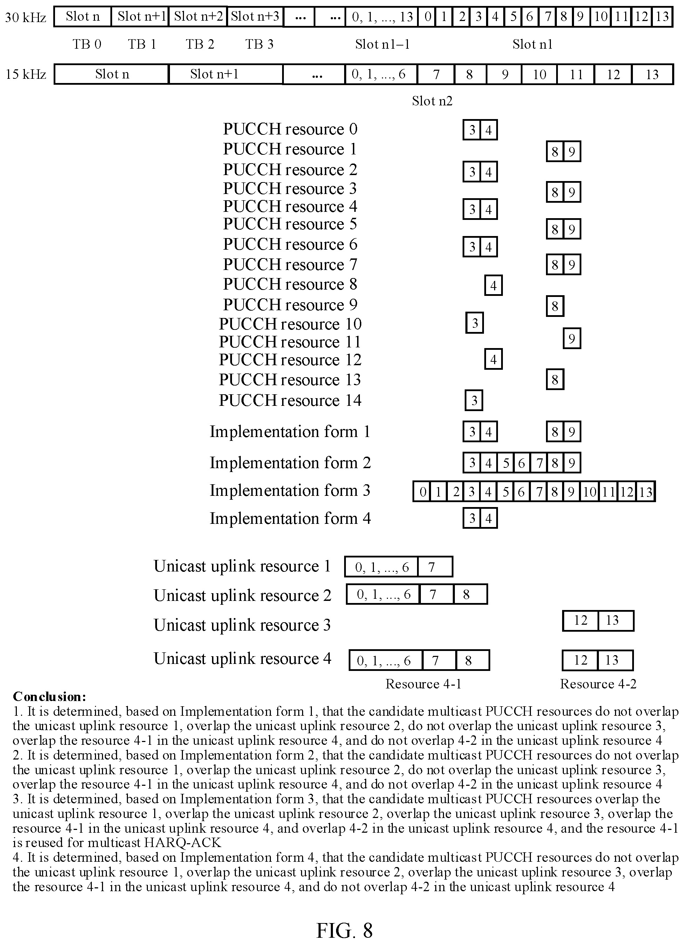

For example, FIG. 8 is a third diagram of the candidate multicast PUCCH resources. In FIG. 8, an example in which two cells are configured for the terminal device, carriers of the two cells are NUL carriers, a subcarrier spacing of one of the cells is 15 kHz, and a subcarrier spacing of the other cell is 30 kHz is used. A subcarrier spacing corresponding to multicast PUCCH resources is 30 kHz. A subcarrier spacing corresponding to unicast uplink resources is 15 kHz. The terminal device transmits a multicast PUCCH in a slot n1, and transmits a PUSCH in a slot n2. In FIG. 8, m=4 is used as an example. To be specific, there are four TBs for the HARQ-ACK information, and there are 15 multicast PUCCH resources. The four TBs in FIG. 8 are a TB 0, a TB 1, a TB 2, and a TB 3. The 15 multicast PUCCH resources are a PUCCH resource 0 to a PUCCH resource 14. Symbols occupied by the PUCCH resource 0 are a symbol 3 and a symbol 4, symbols occupied by the PUCCH resource 1 are a symbol 8 and a symbol 9, symbols occupied by the PUCCH resource 2 are the symbol 3 and the symbol 4, symbols occupied by the PUCCH resource 3 are the symbol 8 and the symbol 9, symbols occupied by the PUCCH resource 4 are the symbol 3 and the symbol 4, symbols occupied by the PUCCH resource 5 are a symbol 8 and a symbol 9, symbols occupied by the PUCCH resource 6 are the symbol 3 and the symbol 4, symbols occupied by the PUCCH resource 7 are the symbol 8 and the symbol 9, a symbol occupied by the PUCCH resource 8 is the symbol 4, a symbol occupied by the PUCCH resource 9 is the symbol 8, a symbol occupied by the PUCCH resource 10 is the symbol 3, a symbol occupied by the PUCCH resource 11 is the symbol 9, a symbol occupied by the PUCCH resource 12 is the symbol 4, a symbol occupied by the PUCCH resource 13 is the symbol 8, and a symbol occupied by the PUCCH resource 14 is the symbol 3.

It can be learned from Implementation form 1 that the time domain resources corresponding to the candidate multicast PUCCH resources are the symbol 3, the symbol 4, the symbol 8, and the symbol 9. It can be learned from Implementation form 2 that the time domain resources corresponding to the candidate multicast PUCCH resources are the symbol 3 to the symbol 9. It can be learned from Implementation form 3 that the time domain resources corresponding to the candidate multicast PUCCH resources are the symbol 0 to a symbol 13. It is assumed that the network device configures or indicates that starting symbols of the PUCCH resource 0 to the PUCCH resource 14 are the same, and ending symbols of the PUCCH resource 0 to the PUCCH resource 14 are the same. As shown in FIG. 8, if the starting symbols of the PUCCH resource 0 to the PUCCH resource 14 are the symbol 3, and the ending symbols of the PUCCH resource 0 to the PUCCH resource 14 are the symbol 4, it can be learned from Implementation form 4 that the time domain resources corresponding to the candidate multicast PUCCH resources are the symbol 3 and the symbol 4.

For example, symbols occupied by a unicast uplink resource 1 are the symbol 0 to the symbol 7. The terminal device may determine, based on Implementation form 1, that the resource set does not overlap the unicast uplink resource 1, and therefore does not need to switch the second reporting mode to the first reporting mode. The terminal device may determine, based on Implementation form 2, that the resource set does not overlap the unicast uplink resource 1, and therefore does not need to switch the second reporting mode to the first reporting mode. The terminal device may determine, based on Implementation form 3, that the resource set overlaps the unicast uplink resource 1, that is, overlapping occurs on the symbol 0 and the symbol 1. In this case, the terminal device needs to switch the second reporting mode to the first reporting mode. The terminal device may determine, based on Implementation form 4, that the resource set does not overlap the unicast uplink resource 1. In this case, the terminal device does not need to switch the second reporting mode to the first reporting mode.

For another example, symbols occupied by a unicast uplink resource 2 are the symbol 0 to the symbol 8. The terminal device may determine, based on Implementation form 1, Implementation form 2, Implementation form 3, or Implementation form 4, that the resource set overlaps the unicast uplink resource 2. In other words, the symbol 3 in the multicast PUCCH resource partially overlaps the symbol 8 in the unicast uplink resource. In this case, the second reporting mode needs to be switched to the first reporting mode.

For another example, symbols occupied by a unicast uplink resource 3 are the symbol 12 and the symbol 13. The terminal device may determine, based on Implementation form 1, Implementation form 2, or Implementation form 4, that the resource set does not overlap the unicast uplink resource 3, and therefore does not need to switch the second reporting mode to the first reporting mode. The terminal device may determine, based on Implementation form 3, that the symbol 10 to the symbol 13 in the multicast PUCCH resources overlap the unicast uplink resource 3, and therefore needs to switch the second reporting mode to the first reporting mode.

For another example, symbols occupied by a unicast uplink resource 4 are the symbol 0 to the symbol 8 (resource 4-1) and the symbol 12 and the symbol 13 (resource 4-2). The symbol 0 to the symbol 8 are used to transmit a PUSCH 1, and the symbol 12 and the symbol 13 are used to transmit a PUSCH 2. The terminal device may determine, based on Implementation form 1, Implementation form 2, or Implementation form 4, that the resource set overlaps the resource 4-1 in the unicast uplink resource 4 but does not overlap the resource 4-2 in the unicast uplink resource, and therefore needs to switch the second reporting mode to the first reporting mode. The terminal device may determine, based on Implementation form 3, that the resource set overlaps the resource 4-1 in the unicast uplink resource 4 and overlaps the resource 4-2 in the unicast uplink resource 4, and therefore needs to switch the second reporting mode to the first reporting mode.

Scenario 5: One cell is configured for the terminal device, carriers configured for the cell include an NUL carrier and an SUL carrier, and the cell includes two different subcarrier spacings. For example, a subcarrier spacing corresponding to the SUL carrier is 15 kHz, and a subcarrier spacing corresponding to the NUL carrier is 30 kHz.

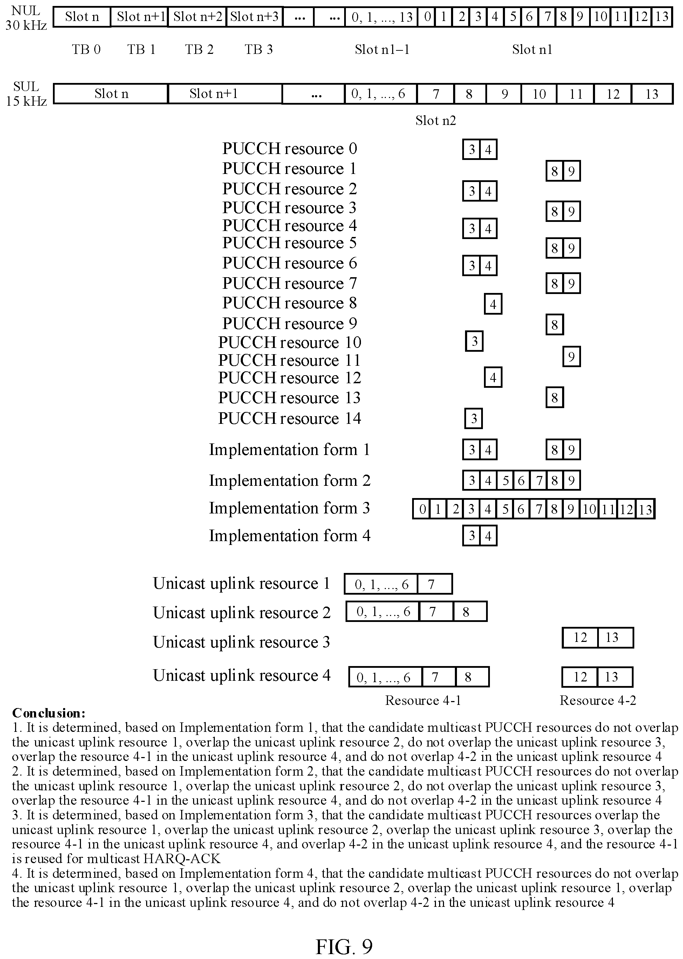

For example, FIG. 9 is a fourth diagram of the candidate multicast PUCCH resources. A difference between FIG. 9 and FIG. 8 lies in that, in FIG. 9, the carriers configured for the cell include the NUL carrier and the SUL carrier. In the scenario shown in FIG. 9, for determining, by the terminal device, whether the candidate multicast PUCCH resources overlap the unicast uplink resource, refer to related content in FIG. 8. Details are not described herein again.

Scenario 6: Two cells are configured for the terminal device, carriers of the two cells are both NUL carriers, and subcarrier spacings of the two cells are different. For example, a subcarrier spacing of one of the cells is 15 kHz, and a subcarrier spacing of the other cell is 30 kHz.

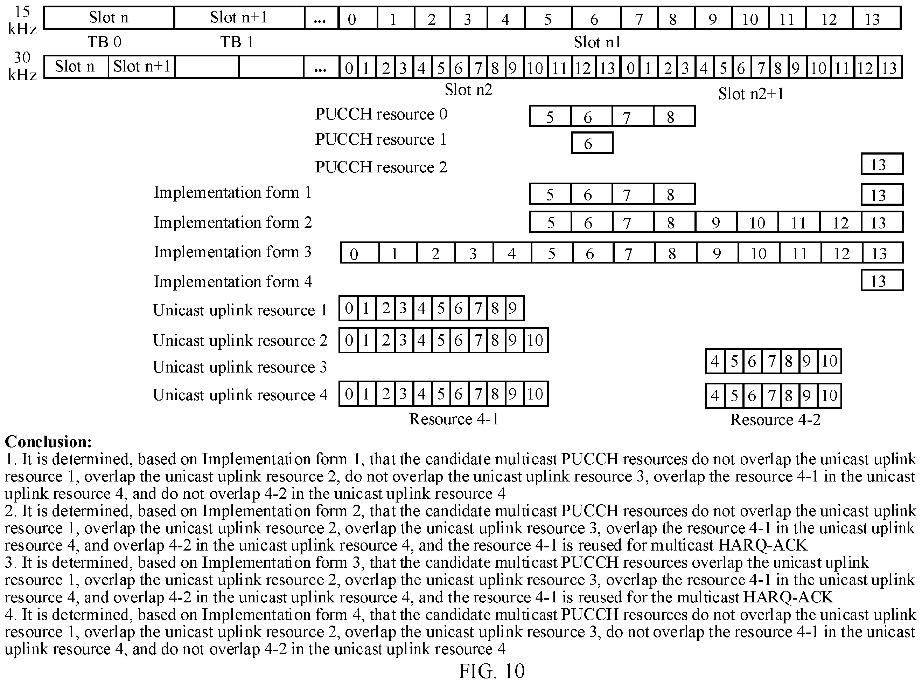

For example, FIG. 10 is a fifth diagram of the candidate multicast PUCCH resources. In FIG. 10, an example in which subcarrier spacings of two cells are respectively 15 kHz and 30 kHz is used. A subcarrier spacing corresponding to multicast PUCCH resources is 15 kHz. A subcarrier spacing corresponding to unicast uplink resources is 30 kHz. In FIG. 10, m=2 is used as an example. To be specific, there are two TBs for the HARQ-ACK information, and there are three multicast PUCCH resources. The two TBs in FIG. 10 are a TB 0 and a TB 1. The three multicast PUCCH resources are a PUCCH resource 0 to a PUCCH resource 2. The terminal device transmits a multicast PUCCH in a slot n1, transmits a PUSCH 1 in a slot n2, and transmits a PUSCH in a slot n2+1. Symbols occupied by the PUCCH resource 0 are a symbol 5 to a symbol 8, a symbol occupied by the PUCCH resource 1 is a symbol 13, and a symbol occupied by the PUCCH resource 2 is the symbol 6.

It can be learned from Implementation form 1 that the time domain resources corresponding to the candidate multicast PUCCH resources are the symbol 5 to the symbol 8, and the symbol 13. It can be learned from Implementation form 2 that the time domain resources corresponding to the candidate multicast PUCCH resources are the symbol 5 to the symbol 13. It can be learned from Implementation form 3 that the time domain resources corresponding to the candidate multicast PUCCH resources are the symbol 0 to the symbol 13. It is assumed that the network device configures or indicates that starting symbols of the PUCCH resource 0 to the PUCCH resource 2 are the same, and ending symbols of the PUCCH resource 0 to the PUCCH resource 2 are the same. As shown in FIG. 10, if the starting symbols of the PUCCH resource 0 to the PUCCH resource 2 are the symbol 13, and the ending symbols of the PUCCH resource 0 to the PUCCH resource 2 are the symbol 13, it can be learned from Implementation form 4 that the time domain resource corresponding to the candidate multicast PUCCH resources is the symbol 13.

For example, symbols occupied by a unicast uplink resource 1 are a symbol 0 to a symbol 9 in the slot n2. The terminal device may determine, based on Implementation form 1, Implementation form 2, or Implementation form 4, that the resource set does not overlap the unicast uplink resource 1, and therefore does not need to switch the second reporting mode to the first reporting mode. The terminal device may determine, based on Implementation form 3, that the resource set overlaps the unicast uplink resource 1, that is, overlapping occurs on the symbol 0 and the symbol 1. In this case, the terminal device needs to switch the second reporting mode to the first reporting mode.

For another example, symbols occupied by a unicast uplink resource 2 are the symbol 0 to a symbol 10 in the slot n2. The terminal device may determine, based on Implementation form 1, Implementation form 2, and Implementation form 3, that the resource set overlaps the unicast uplink resource 2, and therefore needs to switch the second reporting mode to the first reporting mode. The terminal device may determine, based on Implementation form 4, that the resource set does not overlap the unicast uplink resource 2, and therefore does not need to switch the second reporting mode to the first reporting mode.

For another example, symbols occupied by a unicast uplink resource 3 are a symbol 4 to a symbol 11 in the slot n2+1. The terminal device may determine, based on Implementation form 1 or Implementation form 4, that the resource set does not overlap the unicast uplink resource 3, and therefore does not need to switch the second reporting mode to the first reporting mode. The terminal device may determine, based on Implementation form 2 or Implementation form 3, that the multicast PUCCH resources overlap the unicast uplink resource 3, and therefore needs to switch the second reporting mode to the first reporting mode.

For another example, symbols occupied by a unicast uplink resource 4 are the symbol 0 to the symbol 8 (resource 4-1) in the slot n2, and a symbol 12 and a symbol 13 (resource 4-2) in the slot n2+1. The terminal device may determine, based on Implementation form 1, that the resource set overlaps the resource 4-1 in the unicast uplink resource 4 but does not overlap the resource 4-2 in the unicast uplink resource, and therefore needs to switch the second reporting mode to the first reporting mode. The terminal device may determine, based on Implementation form 2 or Implementation form 3, that the resource set overlaps both the resource 4-1 and the resource 4-2 in the unicast uplink resource 4, and therefore needs to switch the second reporting mode to the first reporting mode. The terminal device may determine, based on Implementation 4, that the resource set does not overlap the unicast uplink resource 4, and therefore does not need to switch the second reporting mode to the first reporting mode.

Scenario 7: One cell is configured for the terminal device, carriers of the cell include an NUL carrier and an SUL carrier, and subcarrier spacings of the two carriers are different. A subcarrier spacing corresponding to the SUL carrier is 15 kHz, and a subcarrier spacing corresponding to the NUL carrier is 30 kHz.

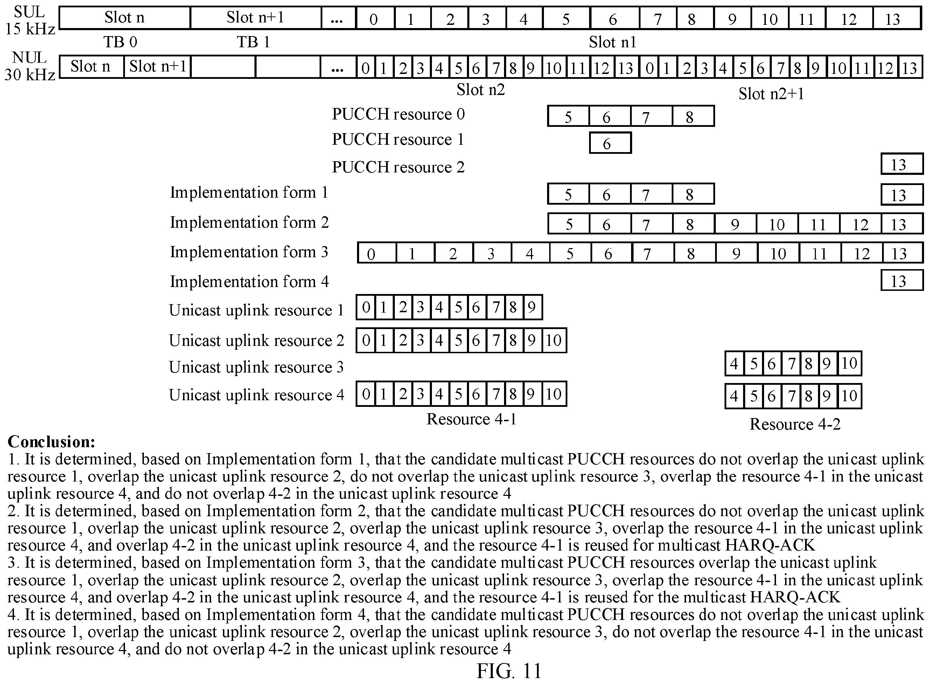

For example, FIG. 11 is a seventh diagram of the candidate multicast PUCCH resources. A difference between FIG. 11 and FIG. 10 lies in that, in FIG. 11, a carrier configured for a cell is an NUL carrier, and a carrier configured for the other cell is an SUL carrier. In the scenario shown in FIG. 11, for determining, by the terminal device, whether the candidate multicast PUCCH resources overlap the unicast uplink resource, refer to related content in FIG. 10. Details are not described herein again.

The foregoing describes four implementation forms of the candidate multicast PUCCH resources by using seven scenarios as examples. It should be noted that this embodiment of this application is not limited to the four implementation forms. For example, the candidate multicast PUCCH resources may include more symbols than those corresponding to Implementation form 1. For example, as shown in FIG. 5, symbols corresponding to the candidate multicast PUCCH resources in time domain may be the symbol 0 to the symbol 4, the symbol 5, and the symbol 7 to the symbol 11, or symbols corresponding to the candidate multicast PUCCH resources in time domain may be the symbol 0 to the symbol 4, the symbol 6, and the symbol 7 to the symbol 11.

S404: The network device sends indication information to the terminal device, and correspondingly, the terminal device receives the indication information sent by the network device.

The indication information may indicate a manner in which the terminal device determines that the resource set overlaps the unicast uplink resource. It may be understood as that the foregoing four implementation forms may be preconfigured or predefined, and the network device may indicate, by using the indication information, the terminal device to determine, in one of the four implementation forms, whether the candidate multicast PUCCH resources overlap the unicast uplink resource. The indication information may be carried in one or more of RRC signaling, a MAC CE, or DCI.

Alternatively, in this embodiment of this application, it may be predefined that one of the four implementation forms is used to determine whether the candidate multicast PUCCH resources overlap the unicast uplink resource. Therefore, S403 is not a mandatory step and is an optional step, and is shown by using a dashed line in FIG. 4. If S404 is performed, S404 is performed before S403.

In embodiments of this application, for a case in which more than one TB is used by the terminal device to feed back the HARQ-ACK information, a method for determining that multicast PUCCH resources overlap a unicast PUCCH resource or a unicast PUSCH resource whose priority is the same as those of the multicast PUCCH resources in time domain is provided. Even if the terminal device does not obtain the decoding result of the multicast PDSCH TB, whether the multicast PUCCH resources overlap the unicast PUCCH resource or the unicast PUSCH resource whose priority is the same as those of the multicast PUCCH resources in time domain can still be determined, to determine whether to switch the second reporting mode to the first reporting mode.

In the foregoing embodiments provided in this application, the methods provided in embodiments of this application are separately described from the perspective of interaction between the terminal device and the network device. To implement functions in the methods provided in the foregoing embodiments of this application, the terminal device and the network device may include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

An embodiment of this application further provides a communication apparatus. The following describes, with reference to the accompanying drawings, communication apparatuses configured to implement the foregoing methods in embodiments of this application.

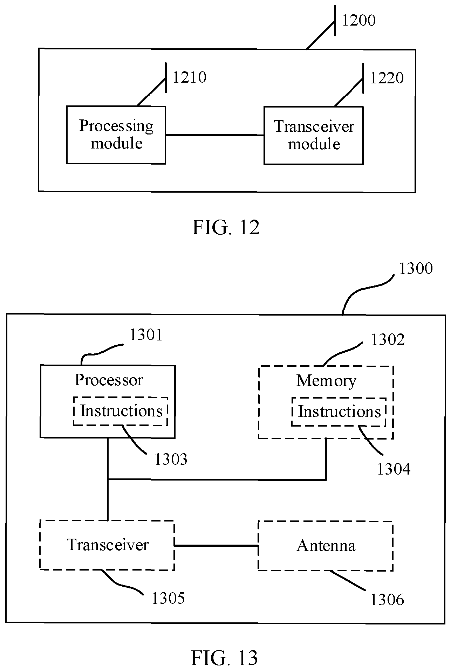

FIG. 12 is a block diagram of a communication apparatus 1200 according to an embodiment of this application. The communication apparatus 1200 may include a processing module 1210 and a transceiver module 1220. Optionally, the communication apparatus 1200 may further include a storage unit. The storage unit may be configured to store instructions (code or a program) and/or data. The processing module 1210 and the transceiver module 1220 may be coupled to the storage unit. For example, the processing module 1210 may read the instructions (the code or the program) and/or the data in the storage unit, to implement a corresponding method. The foregoing modules may be independently disposed, or may be partially or all integrated.

In some possible implementations, the communication apparatus 1200 can correspondingly implement behavior and functions of the terminal device in the foregoing method embodiments. The communication apparatus 1200 may be the terminal device, or may be a component (for example, a chip or a circuit) used in the terminal device, or may be a chip or a chip group in the terminal device, or a part of a chip that is configured to perform a related method function. For example, the communication apparatus 1200 may perform steps such as S401 to S403 in FIG. 4.

For example, the transceiver module 1220 is configured to receive first configuration information sent by a network device, where the first configuration information indicates a second reporting mode, and the second reporting mode indicates to feed back HARQ-ACK information based on a NACK-only. The transceiver module is further configured to: when the processing module 1210 determines that a resource set overlaps a unicast uplink resource, send HARQ-ACK information for a multicast service to the network device in a first reporting mode. The first reporting mode indicates to feed back HARQ-ACK information based on an ACK/a NACK. The second reporting mode indicates to feed back HARQ-ACK information based on a NACK-only. The resource set includes a plurality of multicast PUCCH resources, and the unicast uplink resource includes a unicast PUCCH resource and/or a unicast PUSCH resource. The HARQ-ACK information includes an ACK value or a NACK value, and the HARQ-ACK information corresponding to the first reporting mode may include an ACK value, or may include a NACK value. The HARQ-ACK information corresponding to the second reporting mode includes a NACK value, and does not include an ACK value.

In an optional implementation, the resource set includes 2^{m}-1 PUCCH resources, m is a quantity of transport blocks TBs used by the communication apparatus 1200 to feed back the HARQ-ACK information, and m is an integer greater than or equal to 2.

In an optional implementation, the processing module 1210 is specifically configured to: determine candidate multicast PUCCH resources from the resource set, and when the candidate multicast PUCCH resources meet a first condition, determine that the resource set overlaps the unicast uplink resource. The first condition includes: time domain resources corresponding to the candidate multicast PUCCH resources include a set of time domain symbols respectively occupied by resources in the resource set.

In an optional implementation, that time domain resources corresponding to the candidate multicast PUCCH resources include a set of time domain symbols respectively occupied by resources in the resource set includes one of the following: the time domain resources corresponding to the candidate multicast PUCCH resources are the set of time domain symbols respectively occupied by the resources in the resource set; the time domain resources corresponding to the candidate multicast PUCCH resources are a set of a first starting symbol occupied by the resource set, a first ending symbol occupied by the resource set, and symbols between the first starting symbol and the first ending symbol; the time domain resources corresponding to the candidate multicast PUCCH resources are a set of all symbols included in a slot that the resource set is in; and the time domain resources corresponding to the candidate multicast PUCCH resources are a set of a first symbol, a second symbol, and symbols between the first symbol and the second symbol, where the first symbol is a starting symbol of the resource set, the second symbol is an ending symbol of the resource set, starting symbols of all PUCCH resources in the resource set are the same, and ending symbols of all the PUCCH resources in the resource set are the same.

In an optional implementation, the first starting symbol is a symbol with earliest start time in the time domain symbols occupied by the resources in the resource set, and the first ending symbol is a symbol with latest end time in the time domain symbols occupied by the resources in the resource set.

In an optional implementation, that a resource set overlaps a unicast uplink resource includes: The resource set overlaps the unicast uplink resource having a same priority as the resource set.

In an optional implementation, the transceiver module 1220 is further configured to receive indication information from the network device, where the indication information indicates a manner in which the communication apparatus 1200 determines that the resource set overlaps the unicast uplink resource.

In an optional implementation, the transceiver module 1220 is further configured to receive second configuration information from the network device, where the second configuration information indicates a multicast PUCCH resource set, and the resource set belongs to the multicast PUCCH resource set.

In an optional implementation, the resource set and the unicast PUCCH resource belong to a same PUCCH resource set.

For details, refer to the related content in the foregoing embodiment in FIG. 4. Details are not described herein again.

In some other possible implementations, the communication apparatus 1200 can correspondingly implement behavior and functions of the network device in the foregoing method embodiments. The communication apparatus 1200 may be the network device, may be a component (for example, a chip or a circuit) used in the network device, or may be a chip or a chip set in the network device, or a part of the chip configured to perform a related method function. For example, the communication apparatus 1200 may perform steps such as S401 to S404 in FIG. 4.

For example, the transceiver module 1220 is configured to send first configuration information to a terminal device, where the first configuration information indicates a second reporting mode, and the second reporting mode indicates to feed back HARQ-ACK information based on a NACK-only. When the processing module 1210 determines that a resource set overlaps a unicast uplink resource, the transceiver module 1220 is further configured to receive, in a first reporting mode, HARQ-ACK information sent by the terminal device for a multicast service. The first reporting mode indicates to feed back HARQ-ACK information based on an ACK/a NACK. The second reporting mode indicates to feed back HARQ-ACK information based on a NACK-only. The resource set includes a plurality of multicast PUCCH resources, and the unicast uplink resource includes a unicast PUCCH resource and/or a unicast PUSCH resource. The HARQ-ACK information includes an ACK value or a NACK value, and the HARQ-ACK information corresponding to the first reporting mode may include an ACK value, or may include a NACK value. The HARQ-ACK information corresponding to the second reporting mode includes a NACK value, and does not include an ACK value.

In an optional implementation, the resource set includes 2^{m}-1 PUCCH resources, m is a quantity of transport blocks TBs used by the communication apparatus 1200 to feed back the HARQ-ACK information, and m is an integer greater than or equal to 2.

In an optional implementation, the processing module 1210 is specifically configured to: determine candidate multicast PUCCH resources from the resource set, and when the candidate multicast PUCCH resources meet a first condition, determine that the resource set overlaps the unicast uplink resource. The first condition includes: time domain resources corresponding to the candidate multicast PUCCH resources include a set of time domain symbols respectively occupied by resources in the resource set.

In an optional implementation, that time domain resources corresponding to the candidate multicast PUCCH resources include a set of time domain symbols respectively occupied by resources in the resource set includes one of the following: the time domain resources corresponding to the candidate multicast PUCCH resources are the set of time domain symbols respectively occupied by the resources in the resource set; the time domain resources corresponding to the candidate multicast PUCCH resources are a set of a first starting symbol occupied by the resource set, a first ending symbol occupied by the resource set, and symbols between the first starting symbol and the first ending symbol; the time domain resources corresponding to the candidate multicast PUCCH resources are a set of all symbols included in a slot that the resource set is in; and the time domain resources corresponding to the candidate multicast PUCCH resources are a set of a first symbol, a second symbol, and symbols between the first symbol and the second symbol, where the first symbol is a starting symbol of the resource set, the second symbol is an ending symbol of the resource set, starting symbols of all PUCCH resources in the resource set are the same, and ending symbols of all the PUCCH resources in the resource set are the same.

In an optional implementation, the first starting symbol is a symbol with earliest start time in the time domain symbols occupied by the resources in the resource set, and the first ending symbol is a symbol with latest end time in the time domain symbols occupied by the resources in the resource set.

In an optional implementation, that a resource set overlaps a unicast uplink resource includes: The resource set overlaps the unicast uplink resource having a same priority as the resource set.

In an optional implementation, the transceiver module 1220 is further configured to send indication information to the terminal device, where the indication information indicates a manner in which the terminal device determines that the resource set overlaps the unicast uplink resource.

In an optional implementation, the transceiver module 1220 is further configured to send second configuration information to the terminal device, where the second configuration information indicates a multicast PUCCH resource set, and the resource set belongs to the multicast PUCCH resource set.

In an optional implementation, the resource set and the unicast PUCCH resource belong to a same PUCCH resource set.

For details, refer to the related content in the foregoing embodiment in FIG. 4. Details are not described herein again.

It should be understood that the processing module 1210 in this embodiment of this application may be implemented by a processor or a processor-related circuit component, and the transceiver module 1220 may be implemented by a transceiver, a transceiver-related circuit component, or a communication interface.

FIG. 13 is a block diagram of a communication apparatus 1300 according to an embodiment of this application. The communication apparatus 1300 may be a terminal device, and can implement functions of the terminal device in the methods provided in embodiments of this application. The communication apparatus 1300 may alternatively be an apparatus that can support the terminal device in implementing corresponding functions in the methods provided in embodiments of this application. The communication apparatus 1300 may be a chip system. In this embodiment of this application, the chip system may include a chip, or may include a chip and another discrete component. For specific functions, refer to descriptions of the foregoing method embodiments. The communication apparatus 1300 may alternatively be a network device, and can implement a function of the network device in the methods provided in embodiments of this application. The communication apparatus 1300 may alternatively be an apparatus that can support the network device in implementing corresponding functions in the methods provided in embodiments of this application. The communication apparatus 1300 may be a chip system. In this embodiment of this application, the chip system may include a chip, or may include a chip and another discrete component. For specific functions, refer to descriptions of the foregoing method embodiments.

The communication apparatus 1300 includes one or more processors 1301 that may be configured to implement or support the communication apparatus 1300 in implementing the functions of the terminal device in the methods provided in embodiments of this application. For details, refer to detailed descriptions in the method examples. Details are not described herein again. The one or more processors 1301 may alternatively be configured to implement or support the communication apparatus 1300 in implementing the functions of the network device in the methods provided in embodiments of this application. For details, refer to detailed descriptions in the method examples. Details are not described herein again. The processor 1301 may also be referred to as a processing unit or a processing module, and can implement a specific control function. The processor 1301 may be a general-purpose processor, a dedicated processor, or the like. For example, the processor includes a central processing unit, an application processor, a modem processor, a graphics processing unit, an image signal processor, a digital signal processor, a video codec processor, a controller, a memory, and/or a neural network processor. The central processing unit may be configured to control the communication apparatus 1300, execute a software program, and/or process data. Different processors may be independent devices, or may be integrated into one or more processors, for example, integrated into one or more application-specific integrated circuits.

Optionally, the communication apparatus 1300 includes one or more memories 1302, configured to store instructions 1304. The instructions may be run on the processor 1301, to enable the communication apparatus 1300 to perform the methods described in the foregoing method embodiments. The memory 1302 and the processor 1301 may be separately disposed, or may be integrated together, or it may be considered that the memory 1302 is coupled to the processor 1301. The coupling in this embodiment of this application may be an indirect coupling or a communication connection between apparatuses, units, or modules in an electrical form, a mechanical form, or another form, and is used for information exchange between the apparatuses, the units, or the modules. The processor 1301 may cooperate with the memory 1302. At least one of the at least one memory may be included in the processor. It should be noted that the memory 1302 is not necessary, and therefore is shown by using a dashed line in FIG. 13.

Optionally, the memory 1302 may further store data. The processor and the memory may be separately disposed, or may be integrated together. In this embodiment of this application, the memory 1302 may be a nonvolatile memory such as a hard disk drive (hard disk drive, HDD) or a solid-state drive (solid-state drive, SSD), or may be a volatile memory (volatile memory) such as a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

Optionally, the communication apparatus 1300 may include instructions 1303 (or referred to as code or programs sometimes). The instructions 1303 may be run on the processor, to enable the communication apparatus 1300 to perform the methods described in the foregoing embodiments. The processor 1301 may store data.

Optionally, the communication apparatus 1300 may further include a transceiver 1305 and an antenna 1306. The transceiver 1305 may be referred to as a transceiver unit, a transceiver module, a transceiver machine, a transceiver circuit, a transceiver, an input/output interface, or the like, and is configured to implement a transceiver function of the communication apparatus 1300 through the antenna 1306.

The processor 1301 and the transceiver 1305 described in this application may be implemented on an integrated circuit (integrated circuit, IC), an analog IC, a radio frequency integrated circuit (radio frequency identification, RFID), a mixed-signal IC, an ASIC, a printed circuit board (printed circuit board, PCB), an electronic device, or the like. The communication apparatus described in this specification may be implemented by an independent device (for example, an independent integrated circuit or a mobile phone), or may be a part of a large device (for example, a module that may be embedded in another device). For details, refer to the foregoing descriptions about the terminal device and the network device. Details are not described herein again.

In a possible implementation, the communication apparatus 1300 can correspondingly implement behavior and functions of the terminal device in the foregoing method embodiments. The communication apparatus 1300 may be the terminal device, or may be a component (for example, a chip or a circuit) used in the terminal device, or may be a chip or a chip group in the terminal device, or a part of a chip that is configured to perform a related method function. For example, the communication apparatus 1300 may perform the steps in FIG. 4.

For example, the transceiver 1305 is configured to send first configuration information to a terminal device, where the first configuration information indicates a second reporting mode, and the second reporting mode indicates to feed back HARQ-ACK information based on a NACK-only. When the processor 1301 determines that a resource set overlaps a unicast uplink resource, the transceiver 1305 is further configured to receive, in a first reporting mode, HARQ-ACK information sent by the terminal device for a multicast service. The first reporting mode indicates to feed back multicast HARQ-ACK information based on an ACK/a NACK. The resource set includes a plurality of multicast PUCCH resources, and the unicast uplink resource includes a unicast PUCCH resource and/or a unicast PUSCH resource. The HARQ-ACK information includes an ACK value or a NACK value, and the HARQ-ACK information corresponding to the first reporting mode may include an ACK value, or may include a NACK value. The HARQ-ACK information corresponding to the second reporting mode includes a NACK value, and does not include an ACK value.

In an optional implementation, the transceiver 1305 is further configured to receive indication information sent by the network device, where the indication information indicates a manner in which the communication apparatus 1300 determines that the resource set overlaps the unicast uplink resource.

In an optional implementation, the transceiver 1305 is further configured to receive second configuration information sent by the network device, where the second configuration information indicates a multicast PUCCH resource set, and the resource set belongs to the multicast PUCCH resource set.

For details, refer to the related content in the foregoing embodiment in FIG. 4. Details are not described herein again.

In some other possible implementations, the communication apparatus 1300 can correspondingly implement behavior and functions of the network device in the foregoing method embodiments. The communication apparatus 1300 may be the network device, may be a component (for example, a chip or a circuit) used in the network device, or may be a chip or a chip set in the network device, or a part of the chip configured to perform a related method function. For example, the communication apparatus 1300 may perform the steps in FIG. 4.

For example, the transceiver 1305 is configured to send first configuration information to a terminal device, where the first configuration information indicates a second reporting mode, and the second reporting mode indicates to feed back HARQ-ACK information based on a NACK-only. When the processor 1301 determines that a resource set overlaps a unicast uplink resource, the transceiver 1305 is further configured to receive, in a first reporting mode, HARQ-ACK information sent by the terminal device for a multicast service. The first reporting mode indicates to feed back multicast HARQ-ACK information based on an ACK/a NACK. The resource set includes a plurality of multicast PUCCH resources, and the unicast uplink resource includes a unicast PUCCH resource and/or a unicast PUSCH resource. The HARQ-ACK information includes an ACK value or a NACK value, and the HARQ-ACK information corresponding to the first reporting mode may include an ACK value, or may include a NACK value. The HARQ-ACK information corresponding to the second reporting mode includes a NACK value, and does not include an ACK value.

In an optional implementation, the transceiver 1305 is further configured to send indication information to the terminal device, where the indication information indicates a manner in which the terminal device determines that the resource set overlaps the unicast uplink resource.

In an optional implementation, the transceiver 1305 is further configured to send second configuration information to the terminal device, where the second configuration information indicates a multicast PUCCH resource set, and the resource set belongs to the multicast PUCCH resource set.

For details, refer to the related content in the foregoing embodiment in FIG. 4. Details are not described herein again.

Optionally, the communication apparatus 1300 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 1300 may include more or fewer components, some components are integrated, or some components are split. These components may be implemented by hardware, software, or a combination of software and hardware.

It should be noted that the communication apparatus in the foregoing embodiments may be a terminal device (or a network device), may be a circuit, may be a chip used in a terminal device (or a network device), or may be another combined device, component, or the like that has a function of a terminal (or a network device). When the communication apparatus is the terminal device (or the network device), the transceiver module may be the transceiver, and may include the antenna, a radio frequency circuit, and the like, and the processing module may be the processor, for example, a central processing unit (central processing unit, CPU). When the communication apparatus is a component having a function of the terminal device (or the network device), the transceiver module may be a radio frequency unit, and the processing module may be the processor. When the communication apparatus is a chip system, the communication apparatus may be a field programmable gate array (field programmable gate array, FPGA), an application-specific integrated chip (application-specific integrated circuit, ASIC), a system on chip (system on chip, SoC), a CPU, a network processor (network processor, NP), a digital signal processor (digital signal processor, DSP), a microcontroller (microcontroller unit, MCU), a programmable logic device (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to: receive code instructions (the code instructions are stored in a memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and the transceiver machine.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes at least one terminal device and at least one network device. For example, the communication system includes a terminal device and a network device that are configured to implement related functions in FIG. 4. For details, refer to the related descriptions in the foregoing method embodiments. Details are not described herein again.

An embodiment of this application further provides a computer-readable storage medium, including instructions. When the instructions are run on a computer, the computer is enabled to perform the method performed by the terminal device in FIG. 4. Alternatively, when the instructions are run on the computer, the computer is enabled to perform the method performed by the network device in FIG. 4.

An embodiment of this application further provides a computer program product, including instructions. When the instructions are run on a computer, the computer is enabled to perform the method performed by the terminal device in FIG. 4. Alternatively, when the instructions are run on the computer, the computer is enabled to perform the method performed by the network device in FIG. 4.

An embodiment of this application provides a chip system. The chip system includes a processor, and may further include a memory, configured to implement the function of the terminal device in the foregoing method, or configured to implement the function of the network device in the foregoing method. The chip system may include a chip, or may include a chip and another discrete component.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium, for example, a USB flash drive, a removable hard disk, a read-only memory (read-only memory, ROM), a RAM, a magnetic disk, or an optical disc, that can store program code.

It is clear that a person skilled in the art can make various modifications and variations to this application without departing from the scope of this application. This application is intended to cover these modifications and variations of this application provided that they fall within the scope of protection defined by the following claims of this application and their equivalent technologies.

## Claims

1. A multicast service feedback method, comprising:
receiving, by a terminal device, first configuration information from a network device, wherein the first configuration information indicates a second reporting mode, and the second reporting mode indicates to feed back hybrid automatic repeat request HARQ-ACK information based on a negative acknowledgment only NACK-only; and
when determining that a resource set overlaps a unicast uplink resource, sending, by the terminal device, HARQ-ACK information for a multicast service to the network device in a first reporting mode, wherein the first reporting mode indicates to feed back HARQ-ACK information based on an acknowledgment ACK/a negative acknowledgment NACK, the resource set comprises a plurality of multicast physical uplink control channel PUCCH resources, and the unicast uplink resource comprises a unicast PUCCH resource and/or a unicast physical uplink shared channel PUSCH resource, wherein
the HARQ-ACK information comprises an ACK value or a NACK value.

2. The method according to claim 1, wherein the resource set comprises 2^{m}-1 PUCCH resources, m is a quantity of transport blocks TBs used by the terminal device to feed back the HARQ-ACK information, and m is an integer greater than or equal to 2.

3. The method according to claim 1 or 2, wherein the determining, by the terminal device, that a resource set overlaps a unicast uplink resource comprises:
determining, by the terminal device, candidate multicast PUCCH resources from the resource set; and
determining, by the terminal device when the candidate multicast PUCCH resources meet a first condition, that the resource set overlaps the unicast uplink resource, wherein the first condition comprises: time domain resources corresponding to the candidate multicast PUCCH resources comprise a set of time domain symbols respectively occupied by resources in the resource set.

4. The method according to claim 3, wherein that time domain resources corresponding to the candidate multicast PUCCH resources comprise a set of time domain symbols respectively occupied by resources in the resource set comprises one of the following:
the time domain resources corresponding to the candidate multicast PUCCH resources are the set of time domain symbols respectively occupied by the resources in the resource set; or
the time domain resources corresponding to the candidate multicast PUCCH resources are a set of a first starting symbol occupied by the resource set, a first ending symbol occupied by the resource set, and symbols between the first starting symbol and the first ending symbol; or
the time domain resources corresponding to the candidate multicast PUCCH resources are a set of all symbols comprised in a slot that the resource set is in; or
the time domain resources corresponding to the candidate multicast PUCCH resources are a set comprising a first symbol, a second symbol, and symbols between the first symbol and the second symbol, wherein the first symbol is a starting symbol of the resource set, the second symbol is an ending symbol of the resource set, starting symbols of all PUCCH resources in the resource set are the same, and ending symbols of all the PUCCH resources in the resource set are the same.

5. The method according to claim 4, wherein the first starting symbol is a symbol with earliest start time in the time domain symbols occupied by the resources in the resource set, and the first ending symbol is a symbol with latest end time in the time domain symbols occupied by the resources in the resource set.

6. The method according to any one of claims 1 to 4, wherein that a resource set overlaps a unicast uplink resource comprises: the resource set overlaps the unicast uplink resource whose priority is the same as that of the resource set.

7. The method according to any one of claims 1 to 6, wherein the method further comprises:
receiving, by the terminal device, indication information from the network device, wherein the indication information indicates a manner in which the terminal device determines that the resource set overlaps the unicast uplink resource.

8. The method according to any one of claims 1 to 7, wherein the method further comprises:
receiving, by the terminal device, second configuration information from the network device, wherein the second configuration information indicates a multicast PUCCH resource set, and the resource set belongs to the multicast PUCCH resource set.

9. The method according to any one of claims 1 to 7, wherein the resource set and the unicast PUCCH resource belong to a same PUCCH resource set.

10. A multicast service feedback method, comprising:
sending, by a network device, first configuration information to a terminal device, wherein the first configuration information indicates a second reporting mode, and the second reporting mode indicates to feed back hybrid automatic repeat request HARQ-ACK information based on a negative acknowledgment only NACK-only; and
when determining that a resource set overlaps a unicast uplink resource, receiving, by the network device in a first reporting mode, HARQ-ACK information sent by the terminal device for a multicast service, wherein the first reporting mode indicates to feed back HARQ-ACK information based on an acknowledgment ACK/a negative acknowledgment NACK, the resource set comprises a plurality of multicast physical uplink control channel PUCCH resources, and the unicast uplink resource comprises a unicast PUCCH resource and/or a unicast physical uplink shared channel PUSCH resource, wherein
the HARQ-ACK information comprises an ACK value or a NACK value.

11. The method according to claim 10, wherein the resource set comprises 2^{m}-1 PUCCH resources, m is a quantity of transport blocks TBs used by the terminal device to feed back the HARQ-ACK information, and m is an integer greater than or equal to 2.

12. The method according to claim 10 or 11, wherein the determining, by the network device, that a resource set overlaps a unicast uplink resource comprises:
determining, by the network device, candidate multicast PUCCH resources from the resource set; and
determining, by the network device when the candidate multicast PUCCH resources meet a first condition, that the resource set overlaps the unicast uplink resource, wherein the first condition comprises: time domain resources corresponding to the candidate multicast PUCCH resources comprise a set of time domain symbols respectively occupied by resources in the resource set.

13. The method according to claim 12, wherein that time domain resources corresponding to the candidate multicast PUCCH resources comprise a set of time domain symbols respectively occupied by resources in the resource set comprises one of the following:
the time domain resources corresponding to the candidate multicast PUCCH resources are the set of time domain symbols respectively occupied by the resources in the resource set; or
the time domain resources corresponding to the candidate multicast PUCCH resources are a set of a first starting symbol occupied by the resource set, a first ending symbol occupied by the resource set, and symbols between the first starting symbol and the first ending symbol; or
the time domain resources corresponding to the candidate multicast PUCCH resources are a set of all symbols comprised in a slot that the resource set is in; or
the time domain resources corresponding to the candidate multicast PUCCH resources are a set of a first symbol, a second symbol, and symbols between the first symbol and the second symbol, wherein the first symbol is a starting symbol of the resource set, the second symbol is an ending symbol of the resource set, and the network device configures or indicates that starting symbols of all PUCCH resources in the resource set are the same, and configures or indicates that ending symbols of all the PUCCH resources in the resource set are the same.

14. The method according to claim 13, wherein the first starting symbol is a symbol with earliest start time in the time domain symbols occupied by the resources in the resource set, and the first ending symbol is a symbol with latest end time in the time domain symbols occupied by the resources in the resource set.

15. The method according to any one of claims 10 to 14, wherein that a resource set overlaps a unicast uplink resource comprises: the resource set overlaps the unicast uplink resource whose priority is the same as that of the resource set.

16. The method according to any one of claims 10 to 15, wherein the method further comprises:
sending, by the network device, indication information to the terminal device, wherein the indication information indicates a manner in which the terminal device determines that the resource set overlaps the unicast uplink resource.

17. The method according to any one of claims 10 to 16, wherein the method further comprises:
sending, by the network device, second configuration information to the terminal device, wherein the second configuration information indicates a multicast PUCCH resource set, and the resource set belongs to the multicast PUCCH resource set.

18. The method according to any one of claims 10 to 16, wherein the resource set and the unicast PUCCH resource belong to a same PUCCH resource set.

19. A communication apparatus, comprising a transceiver module and a processing module, wherein
the transceiver module is configured to receive first configuration information sent by a network device, wherein the first configuration information indicates a second reporting mode, and the second reporting mode indicates to feed back hybrid automatic repeat request HARQ-ACK information based on a negative acknowledgment only NACK-only; and
the transceiver module is further configured to: when the processing module determines that a resource set overlaps a unicast uplink resource, send HARQ-ACK information for a multicast service to the network device in a first reporting mode, wherein the first reporting mode indicates to feed back HARQ-ACK information based on an acknowledgment ACK/a negative acknowledgment NACK, the resource set comprises a plurality of multicast physical uplink control channel PUCCH resources, and the unicast uplink resource comprises a unicast PUCCH resource and/or a unicast physical uplink shared channel PUSCH resource, wherein
the HARQ-ACK information comprises an ACK value or a NACK value.

20. The communication apparatus according to claim 19, wherein the resource set comprises 2^{m}-1 PUCCH resources, m is a quantity of transport blocks TBs used by the terminal device to feed back the HARQ-ACK information, and m is an integer greater than or equal to 2.

21. The communication apparatus according to claim 19 or 20, wherein the processing module is specifically configured to:
determine candidate multicast PUCCH resources from the resource set; and
determine, when the candidate multicast PUCCH resources meet a first condition, that the resource set overlaps the unicast uplink resource, wherein the first condition comprises: time domain resources corresponding to the candidate multicast PUCCH resources comprise a set of time domain symbols respectively occupied by resources in the resource set.

22. The communication apparatus according to claim 21, wherein that time domain resources corresponding to the candidate multicast PUCCH resources comprise a set of time domain symbols respectively occupied by resources in the resource set comprises one of the following:
the time domain resources corresponding to the candidate multicast PUCCH resources are the set of time domain symbols respectively occupied by the resources in the resource set; or
the time domain resources corresponding to the candidate multicast PUCCH resources are a set of a first starting symbol occupied by the resource set, a first ending symbol occupied by the resource set, and symbols between the first starting symbol and the first ending symbol; or
the time domain resources corresponding to the candidate multicast PUCCH resources are a set of all symbols comprised in a slot that the resource set is in; or
the time domain resources corresponding to the candidate multicast PUCCH resources are a set comprising a first symbol, a second symbol, and symbols between the first symbol and the second symbol, wherein the first symbol is a starting symbol of the resource set, the second symbol is an ending symbol of the resource set, starting symbols of all PUCCH resources in the resource set are the same, and ending symbols of all the PUCCH resources in the resource set are the same.

23. The communication apparatus according to claim 22, wherein the first starting symbol is a symbol with earliest start time in the time domain symbols occupied by the resources in the resource set, and the first ending symbol is a symbol with latest end time in the time domain symbols occupied by the resources in the resource set.

24. The communication apparatus according to any one of claims 19 to 23, wherein that a resource set overlaps a unicast uplink resource comprises: the resource set overlaps the unicast uplink resource whose priority is the same as that of the resource set.

25. The communication apparatus according to any one of claims 19 to 24, wherein the transceiver module is further configured to:
receive indication information from the network device, wherein the indication information indicates a manner in which the terminal device determines that the resource set overlaps the unicast uplink resource.

26. The communication apparatus according to any one of claims 19 to 25, wherein the transceiver module is further configured to:
receive second configuration information from the network device, wherein the second configuration information indicates a multicast PUCCH resource set, and the resource set belongs to the multicast PUCCH resource set.

27. The communication apparatus according to any one of claims 19 to 26, wherein the resource set and the unicast PUCCH resource belong to a same PUCCH resource set.

28. A communication apparatus, comprising a transceiver module and a processing module, wherein
the transceiver module is configured to send first configuration information to a terminal device, wherein the first configuration information indicates a second reporting mode, and the second reporting mode indicates to feed back hybrid automatic repeat request HARQ-ACK information based on a negative acknowledgment only NACK-only; and
the transceiver module is further configured to: when the processing module determines that a resource set overlaps a unicast uplink resource, receive, in a first reporting mode, HARQ-ACK information sent by the terminal device for a multicast service, wherein the first reporting mode indicates to feed back HARQ-ACK information based on an acknowledgment ACK/a negative acknowledgment NACK, the resource set comprises a plurality of multicast physical uplink control channel PUCCH resources, and the unicast uplink resource comprises a unicast PUCCH resource and/or a unicast physical uplink shared channel PUSCH resource, wherein
the HARQ-ACK information comprises an ACK value or a NACK value.

29. The communication apparatus according to claim 28, wherein the resource set comprises 2^{m}-1 PUCCH resources, m is a quantity of transport blocks TBs used by the terminal device to feed back the HARQ-ACK information, and m is an integer greater than or equal to 2.

30. The communication apparatus according to claim 28 or 29, wherein the processing module is further configured to:
determine candidate multicast PUCCH resources from the resource set; and
determine, when the candidate multicast PUCCH resources meet a first condition, that the resource set overlaps the unicast uplink resource, wherein the first condition comprises: time domain resources corresponding to the candidate multicast PUCCH resources comprise a set of time domain symbols respectively occupied by resources in the resource set.

31. The communication apparatus according to claim 30, wherein that time domain resources corresponding to the candidate multicast PUCCH resources comprise a set of time domain symbols respectively occupied by resources in the resource set comprises one of the following:
the time domain resources corresponding to the candidate multicast PUCCH resources are the set of time domain symbols respectively occupied by the resources in the resource set; or
the time domain resources corresponding to the candidate multicast PUCCH resources are a set of a first starting symbol occupied by the resource set, a first ending symbol occupied by the resource set, and symbols between the first starting symbol and the first ending symbol; or
the time domain resources corresponding to the candidate multicast PUCCH resources are a set of all symbols comprised in a slot that the resource set is in; or
the time domain resources corresponding to the candidate multicast PUCCH resources are a set of a first symbol, a second symbol, and symbols between the first symbol and the second symbol, wherein the first symbol is a starting symbol of the resource set, the second symbol is an ending symbol of the resource set, and the network device configures or indicates that starting symbols of all PUCCH resources in the resource set are the same, and configures or indicates that ending symbols of all the PUCCH resources in the resource set are the same.

32. The communication apparatus according to claim 31, wherein the first starting symbol is a symbol with earliest start time in the time domain symbols occupied by the resources in the resource set, and the first ending symbol is a symbol with latest end time in the time domain symbols occupied by the resources in the resource set.

33. The communication apparatus according to any one of claims 28 to 32, wherein that a resource set overlaps a unicast uplink resource comprises: the resource set overlaps the unicast uplink resource whose priority is the same as that of the resource set.

34. The communication apparatus according to any one of claims 28 to 33, wherein:
the transceiver module is further configured to send indication information to the terminal device, wherein the indication information indicates a manner in which the terminal device determines that the resource set overlaps the unicast uplink resource.

35. The communication apparatus according to any one of claims 28 to 34, wherein the method further comprises:
sending, by the network device, second configuration information to the terminal device, wherein the second configuration information indicates a multicast PUCCH resource set, and the resource set belongs to the multicast PUCCH resource set.

36. The communication apparatus according to any one of claims 28 to 34, wherein the resource set and the unicast PUCCH resource belong to a same PUCCH resource set.

37. A communication apparatus, wherein the communication apparatus comprises a processor and a communication interface, the communication interface is configured to input and/or output information, and the processor is configured to execute a computer program, so that the communication apparatus performs the method according to any one of claims 1 to 9 or the method according to any one of claims 10 to 18.

38. A computer-readable storage medium, wherein the computer-readable storage medium stores a computer program, and when the computer program is executed by a computer, the computer is enabled to perform the method according to any one of claims 1 to 9 or the method according to any one of claims 10 to 18.

39. A computer program product, wherein the computer program product stores a computer program, and when the computer program is executed by a computer, the computer is enabled to perform the method according to any one of claims 1 to 9 or the method according to any one of claims 10 to 18.
